# EUROPEAN PATENT APPLICATION

(11) **EP 1 967 614 A2**
(43) Date of publication of application: **10.09.2008**
(21) Application number: 07107267.2
(22) Date of filing: 30.04.2007
(51) Int. Cl.: C25B 1/12

(54) **Apparatus and method for the conversion of water into a clean burning combustible gas for use as an additive with other forms of fuels**

(30) Priority: 22.02.2007 US 709603
(71) Applicant: Hydrogen Technology Applications, Inc., Clearwater FL 33762 (US)
(72) Inventor: Klein, Dennis J., Clearwater, FL 33762 (US)
(74) Representative: Portal, Gérard

(57) **Abstract**

An electrolyzer with principal and supplemental electrodes configured and made from materials, which decomposes distilled water into a highly efficient clean burning fuel composed of hydrogen, oxygen and their bonds, called HHO or hydrogen-enriched gas that can be used as an additive to combustion engine fuels or in flame or other generating equipment such as torches and welders.

## Description

### BACKGROUND OF THE INVENTION

### Field of the Invention.

This invention is related to equipment or a system and method for the processing of water or distilled water into a gaseous and combustible form of HHO combustible gas produced from water for use in internal combustion engine systems, in other fossil fuel engine systems, in gaseous welding systems and other similar systems. The invention is also related to the form of HHO combustible gas produced from electrolyzers or gas generators connected to such systems.

The field of this patent application has been the subject of a rather vast number of patents. Among such prior art is U. S. Patent No. 4,014,777 issued on March 29, 1977 to Yull Brown under the title "Welding"; U. S. Patent Number 4,081,656 issued on March 28, 1978 to Yull Brown under the title "Arc assisted hydrogen/oxygen welding"; and other similar patents. In accordance with the above patents as well as with the subsequent rather large literature in the field, "Brown gas" is defined as a combustible gas composed of conventional hydrogen and conventional oxygen gases having the exact stochiometric ratio of 2/3 hydrogen and 1/3 oxygen. As we shall see, the combustible gas treated in this invention is dramatically different than the Brown gas.

The electrolytic equipment and methods for water separation have also been the subject of a vast number of patents, among which is U.S. Patent No. 4,726,888 issued Feb. 23, 1988 to Michael McCambridge, entitled "Electrolysis Of Water;" U. S. Patent No. 5,231,954 issued Aug. 3, 1995 to Gene B. Stowe entitled "Hydrogen/Oxygen Fuel Cell"; U.S. Patent No. 5,401,371 issued March 29, 1995 to Yujiro Oshima entitled "Hydrogen Generator;" and others.

The novelty of the present invention over preceding prior art is clear and distinct. The prior art deals with equipment and methods for the processing of water into conventional gaseous fuels, that is, fuels possessing the conventional molecular chemical composition or mixture of chemical compositions and is sometimes referred to as "Brown's Gas". By comparison, the present invention provides equipment or a system and related processes (methodology) to produce novel fuel composed of a chemical species beyond that of molecules, that is, HHO combustible gas, which fuel is produced from water using a particular form of electrolyzer.

### DESCRIPTION OF THE INVENTION

This invention deals with the structure, properties and initial applications of a new clean burning combustible gas hereinafter called "HHO gas" produced from distilled water using a special electrolyzer described in detail in the Specifications.

It will be soon evident that, despite a number of similarities, the HHO gas is dramatically different than the Brown gas or other gases produced by pre-existing electrolyzers. In fact, the latter is a combination of conventional hydrogen and conventional oxygen gases, that is, gases possessing the conventional "molecular" structure, having the exact stochiometric ratio of 2/3 hydrogen and 1/3 oxygen. As we shall see, the HHO gas does not have such an exact stochiometric ratio but instead has basically a structure having a "magnecular" characteristic, including the presence of clusters in macroscopic percentages that cannot be explained via the usual valence bond. As a consequence, the constituents clusters of the Brown Gas and the HHO gas are dramatically different both in percentages as well as in chemical composition, as shown below.

The first remarkable feature of the special electrolyzers of this invention is their efficiencies. For example, with the use of only 4 Kwh, an electrolyzer rapidly converts water into 55 standard cubic feet (scf) of HHO gas at 35 pounds per square inch (psi). By using the average daily cost of electricity at the rate of $0.08/Kwh, the above efficiency implies the direct cost of the HHO gas of $0.007/scf. It then follows that the HHO gas is cost competitive with respect to existing fuels.

Under direct inspection, the HHO gas results to be odorless, colorless and lighter than air. A first basic feature in the production of the HHO gas is that there is no evaporation of water at all, and water is directly transmuted into the HHO gas. In any case, the electric energy available in the electrolyzer is basically insufficient for water evaporation.

This feature alone establishes that the special electrolyzers of this invention produce a "new form of water" which is gaseous and combustible. The main objective of this invention is the first identification on record of the produced unknown chemical composition of the HHO gas, its relationship with the special electrolyzers of this invention, and some initial applications.

The second important feature of the HHO gas is that it exhibits a "widely varying energy content" in British Thermal Units (BTU), ranging from a relatively cold flame in open air, to large releases of thermal energy depending on its use. This is a direct evidence of fundamental novelty in the chemical structure of the HHO gas.

In fact, all known fuels have a "fixed energy content" namely, a value of BTU/scf that remains the same for all uses. Also, the variable character of the energy content of the HHO gas is clear evidence that the gas has a magnecular characteristic in its structure, rather than a molecular structure, namely, that its chemical composition includes bonds beyond those of valence type.

The third important feature of the HHO gas is that it does not require any oxygen for its combustion since it contains in its interior all oxygen needed for that scope. By recalling that other fuels require atmospheric oxygen for their combustion, thus causing a serious environmental problem known as "oxygen depletion," the capability to have combustion without any oxygen depletion renders the HHO gas particularly important on environmental grounds.

The fourth important feature of the HHO gas is its anomalous adhesion to gases, liquids and solids, as verified experimentally below, thus rendering its use particularly effective as an additive for the enhancement of desired qualities.

The fifth important feature of the HHO gas is that it does not follow the fundamental PVT law of all conventional gases (namely, those with molecular structure), since the HHO gas begins to deviate from this law at around 150 psi, and it reacquires the water state at a sufficiently high pressures beginning with 250 psi. These aspects are further being investigated for possible development and commercial exploitation.

The sixth important feature of the HHO gas is that it bonds to gaseous fuels (such as natural gas, magnegas fuel, and other fuels) and liquid fuels (such as diesel, gasoline, liquid petroleum, and other fuels) by significantly improving their thermal content as well as the environmental quality of their exhaust.

The seventh and most important feature of the HHO gas is that it melts almost instantaneously tungsten, bricks, and other highly refractive substances. In particular, measurements have established the remarkable capability by the HHO gas of reaching almost instantaneously temperatures up to 9,000 degrees C, namely a temperature of the order of that in the Sun chromosphere under which all substances on Earth can be sublimated.

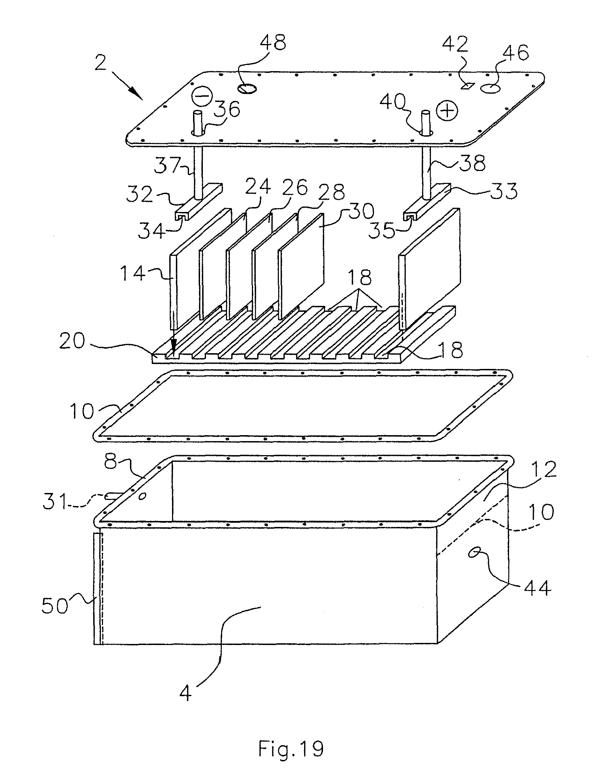

This invention also involves an electrolyzer for the separation of water, which includes, in one embodiment an electrolysis chamber; an aqueous electrolytic solution comprising water and electrolyte, the aqueous electrolyte solution partially filling the electrolysis chamber such that a gas reservoir region is formed above the aqueous electrolyte solution; two principal electrodes comprising an anode electrode and a cathode electrode, the two principal electrodes being at least partially immersed in the aqueous electrolyte solution; one or more supplemental electrodes at least partially immersed in the aqueous electrolyte solution and interposed between the two principal electrodes wherein the two principal electrodes and the one or more supplemental electrodes are held in a fixed spatial relationship; wherein said electrolyzer produces a combustible gas composed of hydrogen and oxygen atoms and their bonds into chemical species caused by electrons valence bonds and the bond due to attractive forces between opposing magnetic polarities originating in the toroidal polarization of the electron orbitals. Furthermore, the relatively simple design of the electrodes -- as rectangular or square metallic flat shapes as shown in Fig. 19 allows for the electrodes to be easily replaced. This oxy-hydric combustible gas is collected in the gas reservoir region, which is adapted to deliver the gas to the fuel system of an internal combustion engine.

The invention can be used to improve the fuel efficiency of an internal combustion engine. The method comprises using any of the embodiments of the electrolyzers disclosed herein in conjunction with an internal combustion engine. An electrical potential is applied to the electrodes of the electrolyzer thereby caused the electrolyzer to generate the gas. The gas is then combined with the fuel in the fuel system of the internal combustion engine before the fuel is combusted in the internal combustion engine.

In still another embodiment of an electrolyzer, an electrolyzer includes an electrolysis chamber which holds an electrolyte solution. The electrolysis chamber mates with a cover at a flange. Preferably, there is a seal between the chamber and cover, which is made from a neoprene gasket, which is placed between the flange and cover. The electrolyte solution may be an aqueous electrolyte solution to produce a mixture of the novel gases; however, to produce the novel inventive gases, distilled water preferably is used.

The electrolyte partially fills the electrolysis chamber during operation to level such that gas reservoir region is formed above the electrolyte solution. The electrolyzer includes two principal electrodes - anode electrode and cathode electrode- which are at least partially immersed in the electrolyte solution. Anode electrode and cathode electrode slip into grooves in a rack. The rack is placed inside the chamber. One or more supplemental electrodes are also placed in the rack. Again, the supplemental electrodes are at least partially immersed in the aqueous electrolyte solution and interposed between the anode electrode and cathode electrode. Furthermore, anode electrode, cathode electrode, and supplemental electrodes are held in a fixed spatial relationship by rack. Preferably, anode electrode, cathode electrode, and supplemental electrodes are separated by a distance of about 0.25 inches. The one or more supplemental electrodes allow for enhanced and efficient generation of this gas mixture. Preferably, there are from 1 to 50 supplemental electrodes interposed between the two principal electrodes. More preferably, there are from 5 to 30 supplemental electrodes interposed between the two principal electrodes, and most preferably, there are about 15 supplemental electrodes interposed between the two principal electrodes. Preferably, the two principal electrodes are each individually a metallic wire mesh, a metallic plate, or a metallic plate having one or more holes. More preferably, the two principal electrodes are each individually a metallic plate. A suitable metal from which the two principal electrodes are formed, includes but is not limited to, nickel, nickel containing alloys, and stainless steel. The preferred metal for the two electrodes is nickel. The one or more supplemental electrodes are preferably a metallic wire mesh, a metallic plate, or a metallic plate having one or more holes or as further described below. More preferably, the one or more supplemental electrodes are each individually a metallic plate. A suitable metal from which the supplemental electrodes are formed, includes but is not limited to, nickel, nickel containing alloys, stainless steel and/or foam based material as described below.

In a still more preferred embodiment for the electrodes, the supplemental electrodes may be made from a high porosity foam based material made substantially of a nickel material (preferably greater than 99% nickel in a foam material where the high porosity electrode results in a composite lattice-like configured electrode due to the use of foam and nickel fibers or powder). Such material for the electrodes can be obtained as INCO® Nickel Foam, C.A.S. No. 7440-02-0 from Inco Special Products in Wyckoff, New Jersey. Typically, the nickel content of this product can vary between 25% and 85% with densities ranging from 1.0 to 2.70 g/cc. Preferably, a nickel content of greater than 99% nickel in the foam plate and about 14% nickel in the stainless steel plates (see below) provides for excellent results in producing the novel oxy-hydric combustible gas. The supplemental electrodes can further be configured so that one of the adjacent supplemental electrodes is made from the foam material and the opposing supplemental electrode is made substantially of a stainless steel material, wherein said supplemental electrodes results in a (+) and (-) electrical (ionic) current flow that causes the formation of a single combustible gas over an entire surface area of both sides of all electrodes within the electrolyzer. Other configurations of electrodes are permissible; however, the above configuration has been found to be very effective in producing the desired oxy-hydric gas.

During operation of the electrolyzer, a voltage is applied between the anode electrode and cathode electrode which causes the novel gas to be produced and which collects in a gas reservoir region. The gaseous mixture exits the gas reservoir region from through an exit port and ultimately is fed into the fuel system of an internal combustion engine. An electrical contact to anode electrode is made through a contactor and electrical contact to cathode electrode is made by another contactor. The contactors are preferably made from metal and are slotted with channels such that the contactors fit over the anode electrode and cathode electrode. The contactors are attached to rods, which slip through holes in the cover. Preferable the holes are threaded and the rods are threaded rods so that rods screw into the holes. The contactors also hold the rack in place since the anode electrode and cathode electrode are held in place by channels and by grooves in the rack. Accordingly, when the cover is bolted to the chamber, the rack is held at the bottom of the chamber. The electrolyzer optionally includes a pressure relief valve and a level sensor. The pressure relief valve allows the gaseous mixture in the gas reservoir to be vented before a dangerous pressure buildup can be formed. The level sensor ensures that an alert is sounded and the flow of gas to the vehicle fuel system is stopped when the electrolyte solution gets too low. At such time when the electrolyte solution is low, addition electrolyte solution is added through a water fill port. The electrolyzer may also include a pressure gauge so that the pressure in the reservoir may be monitored. Finally, the electrolyzer optionally includes one or more fins which remove heat from the electrolyzer.

In a variation of an electrolyzer, a first group of the one or more supplemental electrodes is connected to the anode electrode with a first metallic conductor and a second group of the one or more supplemental electrodes is connected to the cathode electrode with a second metallic conductor. The anode electrode, cathode electrode, and supplemental electrodes are held to the rack by a holder rod, which slips through channels in the rack and the holes in the electrodes. The rack is preferably fabricated from a high dielectric plastic such as PVC, polyethylene or polypropylene. Furthermore, the rack holds the anode electrode, cathode electrode, and supplemental electrodes in a fixed spatial relationship. Preferably, the fixed spatial relationship of the two principal electrodes and the one or more supplemental electrodes is such that the electrodes (two principal and one or more supplemental) are essentially parallel and each electrode is separated from an adjacent electrode by a distance from about 0.15 to about 0.35 inches. More preferably, each electrode is separated from an adjacent electrode by a distance from about 0.2 to about 0.3 inches, and most preferably about 0.25 inches. The fixed spatial relationship is accomplished by a rack that holds the two principal electrodes and the one or more supplemental electrodes in the fixed spatial relationship. The electrodes sit in grooves in the rack which define the separations between each electrode. Furthermore, the electrodes are removable from the rack so that the electrodes or the rack may be changed if necessary. Finally, since the rack and anode electrode and cathode electrode are held in place as set forth above, the supplemental electrodes are also held in place because they are secured to the rack by the holder rod.

During operation, the novel combustible gas is formed by the electrolysis of the electrolyte solution in the electrolyzer. The electrolyzer is connected to a collection tank by a pressure line. The gases are collected and temporarily stored in the collection tank. The collection tank optionally includes a pressure relief valve to guard against any dangerous pressure build up. The collection tank is connected to a solenoid by a pressure line. The solenoid is in turn connected by a pressure line to an engine intake manifold. Optionally, a flash arrestor is incorporated in the pressure line to prevent a flame from propagating in a tube. Furthermore, a pressure line also includes an orifice to regulate the flow of the gaseous mixture into the intake manifold. The size of this orifice will depend on the size of the engine. For example, an orifice diameter of about 0.04 is suitable for a 1 liter engine, about 0.06 inches is suitable for a 2.5 liter engine, and about 0.075 inches is suitable for a V8 engine. The applied voltage to the electrolyzer is provided through the solenoid by an electrolyzer battery. When the pressure in the collection tank drops below about 25 psi, solenoid switches and a voltage of about 12 V is applied between the anode electrode and cathode electrode. A battery isolator allows for charging of a vehicle battery and electrolyzer battery by an alternator while keeping the electrolyzer battery and vehicle battery electrically isolated. Furthermore, the solenoid is powered by the vehicle battery when the main switch is activated. A gas mixer solenoid is also powered by the vehicle battery and opens when the gas mixture is provided to the intake manifold. The solenoid also receives a feedback from the level sensor which causes the solenoid to shut off the gas flow if the electrolyte solution level in the electrolyzer gets too low. Finally, when the method and apparatus of the present invention are used in a vehicle, the operation of the vehicle's oxygen sensor needs to be adjusted to take into account the additional oxygen that is added to the fuel system from the electrolyzer. Normally, if the oxygen sensor senses more oxygen, the vehicle's computer would determine that the engine is running lean and open up the fuel injectors to a richer fuel mixture. This is undesirable and would cause poor fuel economy.

In another embodiment of the present invention, a method for increasing the fuel efficiency of an internal combustion engine is provided. The method of this embodiment utilizes the electrolyzer described above in conjunction with an internal combustion engine. Specifically, the method comprises providing an electrolyzer equipment described above or as further described below in other novel embodiments; applying an electrical potential between the electrodes wherein the novel combustible gas described herein is generated and collected in the gas reservoir region and wherein the electrolyzer is adapted to deliver the combustible gas to the fuel system of an internal combustion engine; and combining the combustible gas produced with fuel in the fuel system of an internal combustion engine. The step of adjusting the operation of an oxygen sensor as set forth above is also provided.

In another embodiment, an electrolyzer or gas generator is incorporated into a welding/cutting torch system or another type of equipment/engine system. This system comprises an electrolyte reservoir, having a top and a bottom, containing electrolytic fluid therein. The fluid herein is preferably water. The electrolyte reservoir comprises a broken or permeable plate, which is sealably and circumferentially positioned around a top end of the electrolyte reservoir. Plate functions to release gas pressure within the electrolyte reservoir when exceeding a pre-determined safety level.

The self-producing hydrogen and oxygen gas generating system further comprises a pump, preferably an electromagnetic pump, which is connected at one distal end to the bottom of the electrolyte reservoir. Pump is connected at an opposite distal end to at least one hydrogen and oxygen electrolyzer/generator containing an electrical conductor therein. The electrical conductor is electrically connected on one distal end to an electrical ground. The opposite distal end of the electrical conductor is electrically connected to one distal end of a pressure controller. The opposite distal end of the electrical conductor is electrically connected to a power source. Pump functions to circulate electrolytic fluid from the electrolyte reservoir through at least one hydrogen and oxygen electrolyzer/generator through a radiator back into the electrolyte reservoir via a gas pipe. The radiator functions to cool the generated hydrogen and oxygen gas before returning to the electrolyte reservoir.

The pressure controller is connected to the electrolyte reservoir and monitors the pressure therein. When gas pressure within the electrolyte reservoir exceeds a pre-determined level, electrical current is terminated to the electrical conductor contained within the hydrogen and oxygen generator thereby ceasing production of hydrogen and oxygen gas. When gas pressure within the electrolyte reservoir drops below a pre-determined level, electrical current is connected to the electrical conductor contained within the hydrogen and oxygen generator thereby commencing production of hydrogen and oxygen gas. The pre-selected level is less than the pre-selected level required to cause a pressure release through plate.

This self-producing on-demand hydrogen and oxygen generating system further comprises a non-return valve connected at one end to an upper end of the electrolyte reservoir below plate. The non-return valve is further connected to a dryer/filter means or tank at an opposite distal end.

System further comprises another filter/dryer means or tank in fluid communication with one end of the electrolyte reservoir above plate and further connected at an opposite distal end to another non-return valve via gas line, which is connected at an opposite end to another filter/dryer means or tank.

System further comprises a decompression valve in fluid communication at one end to the top end of the electrolyte reservoir and further being in fluid communication with the gas pipe, which in turn is connected to radiator.

The welding system further comprises a microprocessor controlled D.C. amperage regulator adapted to regulate the D.C. amperage from the power source to the hydrogen and oxygen generator. A first microprocessor controlled cut-off switch is adapted to terminate the power source to the welder in response to a malfunction of the pump.

A second microprocessor controlled cut-off switch is adapted to terminate the power source to the welder in response to an insufficient electrolyte solution condition within the electrolyte reservoir. A microprocessor controlled liquid crystal display is adapted to display operating statistics regarding the welding system, such statistics to include hours of operation, amperage, indicator lights and pressure gauge readings. The liquid crystal display receives input from a plurality of locations within the system.

A microprocessor controlled polarity change system is adapted to change the polarity of the electrical conductor located within the hydrogen and oxygen generator. A microprocessor controlled cool-down system is adapted to operate a generator fan and the pump wherein operation of the fan and the pump continue throughout a cool-down stage following manual shut-off of the welder.

The produced gas or HHO gas is routed from the dryer means to the final gas reservoir tank. Dryer means and are only exemplary. It is understood that a single unit may be designed to effectively accomplish the same objective. The gas is then supplied on-demand to the engine or in this case, the welding equipment, through gas line and hydrogen flash suppressor check valve (non-return valve) and control valve.

As mentioned above, a flame from said produced gas or species of hydrogen and oxygen, from said electrolyzer can instantly melt solids without the use of atmospheric oxygen. The produced gas can also be used as a fuel without the use of atmospheric oxygen, and can bond to other substances via magnetic induction.

A bond is created between a fossil fuel and a combustible gas composed by a combination of hydrogen and oxygen atoms with toroidal polarization of their orbitals. The bond originates from the induced magnetic polarization of at least some of the orbitals of said fuel and the consequential attraction between opposing magnetic polarities. The combustion exhaust of the resulting fuel is cleaner than that of said fossil fuels. Further, the resulting fuel has contained more thermal energy than that of said fossil fuels.

### BRIEF DESCRIPTION OF THE DRAWINGS

In the accompanying drawings,
Fig. 1a depicts a conventional hydrogen atom with its distribution of electron orbitals in all space directions, thus forming a sphere;
Fig. 1b depicts the same hydrogen atom wherein its electron is polarized to orbit within a toroid resulting in the creation of a magnetic field along the symmetry axis of said toroid;
Fig. 2a depicts a conventional hydrogen molecule with some of the rotations caused by temperature;
Fig. 2b depicts the same conventional molecule in which the orbitals are polarized into toroids, thus causing two magnetic fields in opposite directions since the hydrogen molecule is diamagnetic;
Fig. 3a depict the conventional water molecules H-O-H in which the dimers H-O and O-H form an angle of 105 degrees, and in which the orbitals of the two H atoms are polarized in toroids perpendicular to the H-O-H plane;
Fig. 3b depicts the central species of this invention consisting of the water molecule in which one valence bond has been broken, resulting in the collapse of one hydrogen atom against the other;
Fig. 4a depicts a polarized conventional hydrogen molecule;
Fig. 4b depicts a main species of this invention, the bond between two hydrogen atoms caused by the attractive forces between opposing magnetic polarities originating in the toroidal polarizations of the orbitals;
Fig. 5 depicts a new chemical species identified for the first time in this invention consisting of two dimers H-O of the water molecule in their polarized form as occurring in the water molecule, with consequential magnetic bond, plus an isolated and polarized hydrogen atom also magnetically bonded to the preceding atoms;
Fig. 6 depicts mass spectrometric scans of the HHO gas of this invention;
Fig. 7 depicts infrared scans of the conventional hydrogen gas;
Figure 8 depicts infrared scans of the conventional oxygen gas;
Fig. 9 depicts infrared scans of the HHO gas of this invention;
Fig. 10 depicts the mass spectrography of the commercially available diesel fuel;
Fig. 11 depicts the mass spectrography of the same diesel fuel of the preceding Fig. 10 with the HHO gas of this invention occluded in its interior via bubbling;
Fig. 12 depicts an analytic detection of the hydrogen content of the HHO gas of this invention;
Fig. 13 depicts an analytic detection of the oxygen content of the HHO gas of this invention;
Fig. 14 depicts an analytic detection of impurities contained in the HHO gas of this invention;
Fig. 15 depicts the anomalous blank of the detector since it shows residual substances following the removal of the gas;
Fig. 16 depicts a scan confirming the presence in HHO of the basic species with 2 amu representing H-H and HxH, and the presence of a clean species with 5 amu that can only be interpreted as H-HxH-HxH;
Fig. 17 depicts a scan which provides clear evidence of a species with mass 16 amu that in turn confirms the presence in HHO of isolated atomic oxygen, and which confirms the presence in HHO of the species H-O with 17 amu and the species with 18 amu consisting of H-O-H and HxH-O;
Fig. 18 depicts a scan which establishes the presence in HHO of the species with 33 amu representing O-OxH or O-O-H, and 34 amu representing O-HxO-H and similar configurations;
Fig. 19 is an exploded view of an electrolyzer;
Fig. 20 is top view of a variation of an electrolyzer in which one group of supplemental electrodes are connected to the anode electrode and a second group of supplemental electrodes are connected to the cathode electrode;
Fig. 21 is a perspective view of the electrode plate securing mechanism for the electrolyzer of Figure 20;
Fig. 22 is a plumbing schematic showing the integration of an electrolyzer when applied to a vehicle;
Fig. 23 is an electrical schematic showing the integration of an electrolyzer when applied to a vehicle;
Fig. 24 is a schematic representation of a mixed gas electrolyzer applied to a welder system; and
Fig. 25 is a conceptual schematic depiction of an alternative electrode arrangement where power is connected to a plurality of anodes and cathodes with the supplemental electrodes being neutral and not connected to a power source and the ground being connected to the housing of the electrolyzer chamber.

### DETAILED DESCRIPTION OF THE INVENTION

A summary of the scientific representation of the preceding main features of the HHO or oxy-hydric gas is outlined below without formulae for simplicity of understanding by a broader audience.

Where the HHO gas originates from distilled water using a special electrolytic process described hereinafter, it is generally believed that such a gas is composed of 2/3 (or 66.66% in volume) hydrogen H2 and 1/2 (or 33.33% in volume) oxygen O2.

A fundamental point of this invention is the evidence that such a conventional mixture of H2 and O2 gases absolutely cannot represent the above features of the HHO gas, thus establishing the novel existence in the produced inventive HHO gas.

The above occurrence is established beyond any possible doubt by comparing the performance of the HHO gas with that of a mixture of 66.66% of H2 and 33.33% of O2. There is simply no condition whatsoever under which, the latter gas can instantly cut tungsten or melt bricks as done by the HHO gas, therein supporting the novelty in the chemical structure of the produced HHO gas.

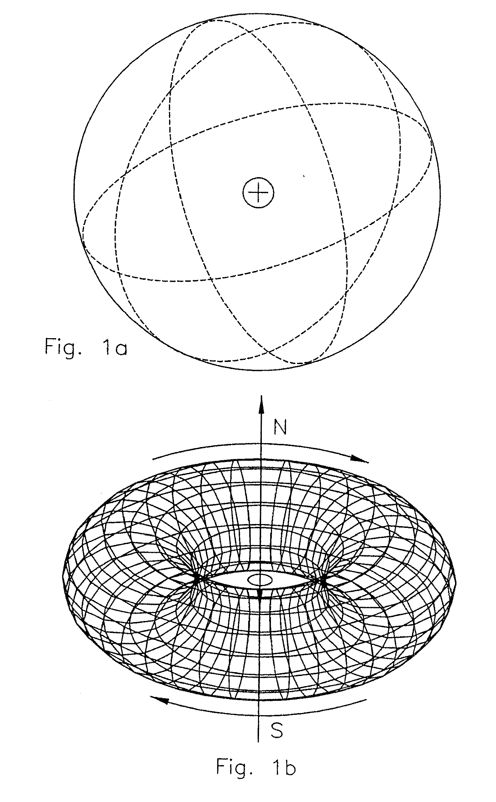

To begin the identification of the novelty in the HHO gas we note that the special features of the HHO gas, such as the capability of instantaneous melting tungsten and bricks, require that HHO contains not only "atomic hydrogen" (that is, individual H atoms without valence bond to other atoms as in Figure 1a), but also "magnetically polarized atomic hydrogen", that is, hydrogen atoms whose electrons are polarized to rotate in a toroid, rather than in all space directions, as per Figure 1b.

It should be indicated that the Brown gas does assumes the existence of "atomic hydrogen". However, calculations have established that such a feature is grossly insufficient to explain all the feature of the HHO gas, as it will be evidence in the following. The fundamental novelty of this invention is, therefore, the use of "polarized atomic hydrogen" as depicted in Figure 1b.

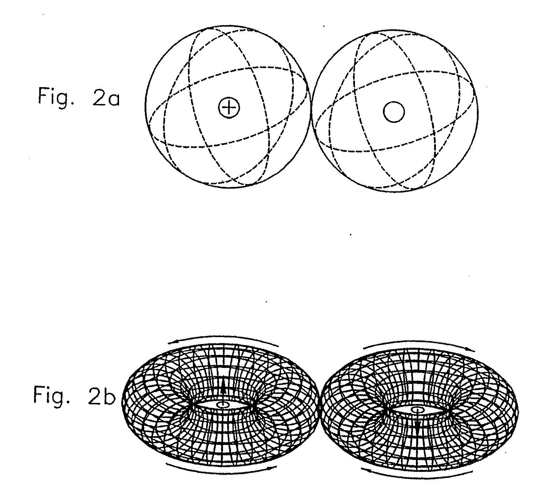

Alternatively, in the event the hydrogen contained in the HHO gas is bonded to another atom, the dimension of the H2 molecules caused by thermal rotations (as partially depicted in Figure 2a) are such to prevent a rapid penetration of hydrogen within deeper layers of tungsten or bricks, thus preventing their rapid melting. The only know configuration of the hydrogen molecule compatible with the above outlined physical and chemical evidence is that the molecule itself is polarized with its orbitals restricted to rotate in the oo-shaped toroid of Figure 2b.

In fact, polarized hydrogen atoms as in Figure 1b and polarized hydrogen molecules as in Figure 2b are sufficiently thin to have a rapid penetration within deeper layers of substances. Moreover, the magnetic field created by the rotation of electrons within toroids is such so as to polarize the orbitals of substances when in close proximity, due to magnetic induction. But the polarized orbitals of tungsten and bricks are essentially at rest. Therefore, magnetic induction causes a natural process of rapid self-propulsion of polarized hydrogen atoms and molecules deep within substances.

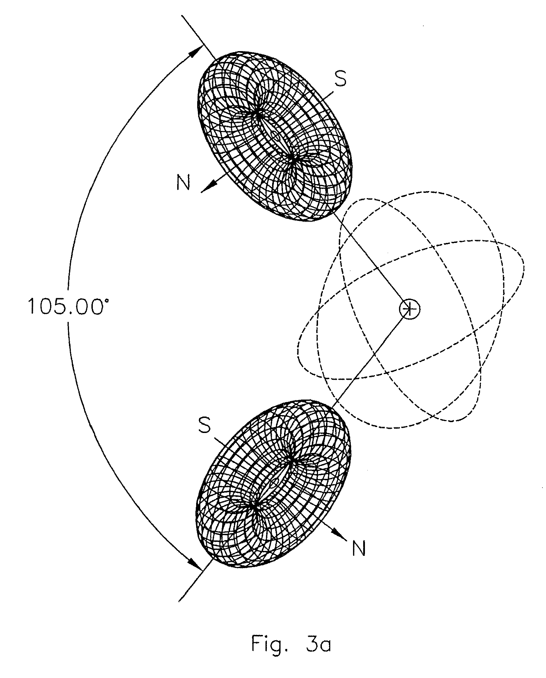

Nature has set the water molecule H2O = H-O-H in such a way that its H atoms do not have the spherical distribution of Figure 1a, and have instead precisely the polarized distribution of Figure 1b along a toroid whose symmetry plane is perpendicular to that of the H-O-H plane, as depicted in Figure 3a, as established in the technical literature, e.g., in D. Eisenberg and W. Kauzmann, "The Structure and Properties of Water." Oxford University Press (1969).

It is also known that the H-O-H molecule at ambient temperature and pressure, even though with a null total charge, has a high "electric polarization" (deformation of electric charge distributions) with the predominance of the negative charge density localized in the O atom and the complementary predominant positive charge density localized in the H atoms. This implies a repulsion of the H atoms caused by their predominantly positive charges, resulting in the characteristic angle of 105 degree between the H-O and O-H dimers as depicted in Figure 3a.

Nevertheless, it is well established in quantum electrodynamics that toroidal polarizations of the orbitals of the hydrogen atom as in the configuration of Figure 1b create very strong magnetic fields with a symmetry axis perpendicular to the plane of the toroid, and with a value of said magnetic fields that is 1,415 times bigger than the magnetic moment of the H-nucleus (the proton), thus having a value such to overcome the repulsive force due to charges.

It then follows that, in the natural configuration of the H-O-H molecule, the strong electric polarization caused by the oxygen is such to weaken the magnetic field of the toroidal polarization of the H-orbital resulting in the indicated repulsion of the two H-atoms in the H-O-H structure.

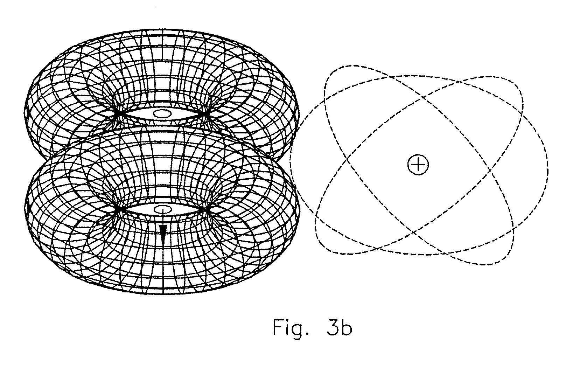

However, as soon as the strong electric polarization of H-O-H is removed, the very strong attraction between opposite polarities of the magnetic fields of the polarized H atom become dominant over the Coulomb repulsion of the charges, resulting in the new configuration of Figure 3b that has been discovered in this invention.

The central feature of this invention is, therefore, that the special electrolyzer of this invention is such to permit the transformation of the water molecule from the conventional H-O-H configuration of Figure 3a to the basically novel configuration of Figure 3b, which latter configuration is, again, permitted by the fact that, in the absence of electric polarization, the attraction between opposite magnetic polarities of the toroidal distributions of the orbitals is much stronger than the Coulomb repulsion due to charges.

By denoting with "-" the valence bond and with "x" the magnetic bond, the water molecule is given by H-O-H (Figure 3a) and its modified version in the HHO gas is given by HxH-O (Figure 3b). As a result, according to the existing scientific terminology, as available, e.g., in R. M. Santilli, "Foundations of Hadronic Chemistry", Kluwer Academic Publisher (2001), H-O-H is a "molecule," because all bonds are of valence type, while HxH-0 must be a specific "magnecule," because one of its bonds is of magnecular type.

The validity of the above rearrangement of the water molecule is readily established by the fact that, when the species H-O-H is liquid, the new species HxH-O can be easily proved to be gaseous. This is due to various reasons, such as the fact that the hydrogen is much lighter than the oxygen in the ratio 1 atomic mass units (amu) to 16 amu. As a result, from a thermodynamical view point, the new species HxH-O is essentially equivalent to ordinary gaseous oxygen in full conformity with conventional thermodynamical laws, since the transition from liquids to gases implies an increase of entropy, as well known. This feature explains the creation by our special electrolyzer of a new form of gaseous water without any need for evaporation energy.

There are also other reasons for which the transition from the H-O-H configuration of Figure 3a to the HxH-O configuration of Figure 3b implies the necessary transition from the liquid to the gaseous state. As it is established in the chemical literature (see D. Eisenberg and W Kauzmann quoted above), the liquid state of water at ambient temperature and pressure is caused by the so-called "hydrogen bridges," namely a terminology introduced to represent the experimental evidence of the existence of "attractions between hydrogen atoms of different water molecules."

However, the above interpretation of the liquid state of water remain essentially conceptual because it lacks completely the identification of the "attractive force" between different H atoms, as necessary for the very existence of the liquid state. Note that such attraction cannot be of valence type because the only available electron in the H atom is completely used for its bond in the H-O-H molecule. Therefore, the bridge force cannot credibly be of valence type.

The precise identification of the attractive force in the hydrogen bridges of water at the liquid state has been done by R. Santilli in the second above quoted literature, and has resulted to be precisely of magnecular type, in the sense of being due precisely to attraction between opposite magnetic polarities of toroidal distributions of orbitals that are so strong to overcome repulsive Coulomb forces.

In different terms, a central feature of this invention is that the transition from the H-O-H configuration to the new HxH-O one is essentially caused by the two H atoms establishing an "internal hydrogen bridge," rather than the usual "external bridge with other H atoms. The first fundamental point is the precise identification of the "physical origin of the attractive force" as well as its "numerical value," without which science is reduced to a mere political nomenclature.

In view of the above, it is evident that the transition from the H-O-H configuration of Figure 3a to the HxH-O configuration of Figure 3b implies the disruption of all possible hydrogen bridges, thus prohibiting the HxH-O magnecule to be liquid at ambient temperature and pressure. This is due, e.g., to the rotation of the HxH dimer around the O atom under which no stable hydrogen bridge can occur.

In conclusion, the transition from the conventional H-O-H configuration of Figure 3a to the new configuration HxH-O of Figure 3b implies the necessary transition from the liquid to the gaseous state.

A first most important experimental verification of this invention is that the removal of the electric polarization of the water molecule, with consequential transition from the H-O-H to the new HxH-O configuration, can indeed be achieved via the minimal energy available in the electrolyzer and absolutely without the large amount of energy needed for water evaporation.

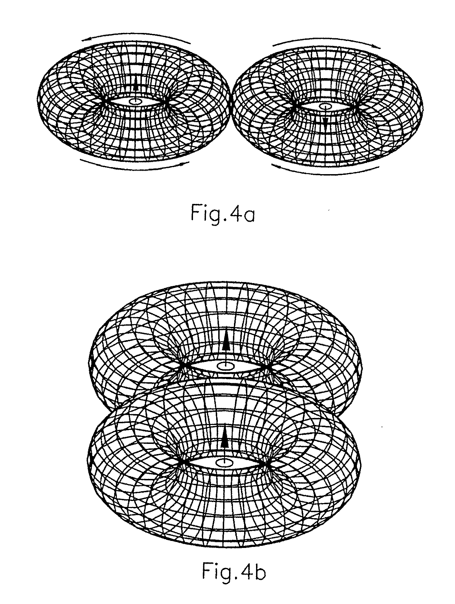

It is evident that the conventional H-O-H species is stable, while the new configuration HxH-O is unstable, e.g., because of collision due to temperature, thus experiencing its initial separation into the oxygen O and HxH. The latter constitutes a new chemical "species", hereinafter referred to detectable "clusters" constituting the HHO gas, whose bond, as indicated earlier, originates from the attractive force between opposing magnetic polarities in the configuration when the toroidal orbitals are superimposed as depicted in Figure 4b, rather than being of the conventional molecular type depicted in Figure 4a.

The new chemical species HxH is another central novelty of this invention inasmuch as it contains precisely the polarized atomic hydrogen needed to explain physical and chemical evidence recalled earlier, the remarkable aspect being that these polarizations are set by nature in the water molecule, and mainly brought to a useful form by the inventive electrolyzer.

Note that one individual polarized atomic hydrogen, as depicted in Figure 1b, is highly unstable when isolated because the rotations due to temperatures instantaneously cause said atom to recover the spherical distribution of Figure 1a.

However, when two or more polarized H atoms are bonded together as in Figure 4b, the bond is fully stable at ambient temperature since all rotations now occur for the coupled H-atoms. It then follows that the size of the HxH species under rotation due to temperature is one half the size of an ordinary H molecule, since the radius of the preceding species is that of one H atom, while the radius of the later species is the diameter of one H atom. In turn, this reduction in size is crucial, again, to explain the features of the HHO gas.

Needless to say, it is possible to prove via quantum chemistry that the HxH species has a 50% probability of converting into the conventional H-H molecule. Therefore, the hydrogen content of the HHO gas is predicted to be given by a mixture of HxH and H-H that, under certain conditions, can be 50%-50%.

The H-H molecule has a weight of 2 atomic mass units (amu). The bond in HxH is much weaker than the valence bond of H-H. Therefore, the species HxH is predicted to be heavier than the conventional one H-H (because the binding energy is negative). However, such a difference is of the order of a small fraction of one amu, thus being beyond the detecting abilities of currently available analytic instruments solely based on mass detection. It ten follows that the species HxH and H-H will appear to be identical under conventional mass spectrographic measurements since both will result to have the mass of 2 amu.

The separation and detection of the two species HxH and H-H require very accurate analytic equipment based on magnetic resonances, since the HxH species has distinct magnetic features that are completely absent for the H-H species, thus permitting their separation and identification. In this patent application, experimental evidence is presented based on conventional mass spectrometry.

It should be also noted that the weaker nature of the bond HxH over the conventional valence bond H-H is crucial for the representation of physical and chemical evidence. The sole interpretation of the latter is permitted by "polarized atomic hydrogen," namely, isolated hydrogen atoms without valence bonds with the polarization of Figure 1b.

It is evident that the conventional hydrogen molecule H-H does not allow a representation of said physical and chemical evidence precisely in view of the strong valence bond H-H that has to be broken as a necessary condition for any chemical reaction. By comparison, the much weaker magnecular bond HxH permits the easy release of individual hydrogen atoms, precisely as needed to represent experimental data. As a matter of fact, this evidence is so strong to select the new HxH species as the only one explaining physical and chemical behavior of the HHO gas, since the conventional H-H species absolutely cannot represent such evidence as stressed above.

The situation for the oxygen atom following its separation in the H-O-H molecule is essentially similar to that of hydrogen. When the oxygen is a member of the H-O-H molecule, the orbitals of its two valence electrons are not distributed in all directions in space, but have a polarization into toroids parallel to the corresponding polarizations of the H atoms.

It is then natural to see that, as soon as one H-valence bond is broken, and the two H atoms collapse one against the other in the HxH-O species, the orbitals of the two valance electrons of the O atom are correspondingly aligned. This implies that, at the time of the separation of the HxH-O species into HxH and O, the oxygen has a distinct polarization of its valence orbitals along parallel toroids. In addition, the oxygen is paramagnetic, thus quite responsive to a toroidal polarization of the valence electrons as customary under magnetic induction when exposed to a magnetic field.

It then follows that the oxygen contained in the HHO gas is initially composed of the new magnecular species OxO, that also has a 50% probability of converting into the conventional molecular species O-O, resulting in a mixture of OxO and O-O according to proportions that can be, under certain conditions, 50%-50%.

The O-O species has the mass of 32 amu. As in the case for HxH, the new species OxO has a mass bigger than 32 amu due to the decrease in absolute value of the binding energy (that is negative) and the consequential increase of the mass. However, the mass increase is of a fraction of one amu, thus not being detectable with currently available mass spectrometers.

It is easy to see that the HHO gas cannot be solely composed of the above identified mixture of HxH/H-H and OxO/O-O gases and numerous additional species are possible. This is due to the fact that, valence bonds ends when all valence electrons are used, in which case no additional atom can be added. On the contrary, magnecular bonds such as that of the HxH structure of Figure 4b have no limit in the number of constituents, other than the limits sets forth by temperature and pressure.

In the order of increased values of amu, we therefore expect in the HHO gas the presence of the following additional new species.

First, there is the prediction of the presence of a new species with 3 amu consisting of HxHxH as well as H-HxH. Note that the species H-H-H is impossible since the hydrogen has only one valence electron and valance bonds only occur in pairs as in H-H, thus prohibiting the triplet valence bonds H-H-H.

It should be recalled that a species with 3 amu, thus composed of three H atoms, has already been identified in mass spectrometry. The novelty of this invention is the identification of the fact that this species is a magnecule HxH-H and not the molecule H-H-H, since the latter is impossible.

Next, there is the prediction of traces of a species with 4 amu that is not the helium (since there is no helium in water) and it is given instead by the magnecule (H-H)x(H-H) having essentially the same atomic mass of the helium. Note that the latter species is expected to exist only in small traces (such as parts per million) due to the general absence in the HHO gas of polarized hydrogen molecules H-H needed for the creation of the species (H-H)-(H-H).

Additional species with more than four hydrogen atoms are possible, but they are highly unstable under collisions due to temperature, and their presence in the HHO gas is expected to be in parts per millions. Therefore, no appreciable species is expected to exist in the HHO gas between 4 amu and 16 amu (the latter representing the oxygen).

The next species predicted in the HHO gas has 17 amu and consists of the magnecule HxO that also has a 50% transition probability to the conventional radical H-O. Detectable traces of this species are expected because they occur in all separations of water.

The next species expected in the HHO gas has the mass of 18 amu and it is given by the new magnecular configuration of the water HxH-O of Figure 3b. The distinction between this species and the conventional water molecule H-O-H at the vapor state can be easily established via infrared and other detectors.

The next species expected in the HHO gas has the mass of 19 amu and it is given by traces the magnecule HxH-O-H or HxH-O-H. A more probable species has the mass of 20 amu with structure HxH-O-HxH.

Note that heavier species are given by magnecular combination of the primary species present in the HHO gas, namely, HxH and OxO. We therefore have a large probability for the presence of the species HxH-OxO with 34 amu and HxH-OxO-H with 35 amu.

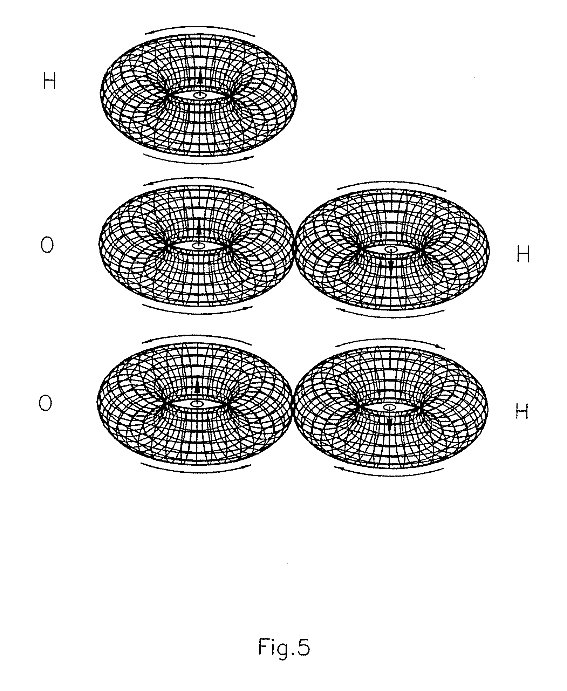

The latter species is depicted in Figure 5 and consists of two conventional dimers H-O of the water molecule under bond caused by opposite polarities of the magnetic fields of their polarized valence electron orbitals, plus an additional hydrogen also bonded via the same magnecular law.

Additional heavier species are possible with masses re-presentable with the simple equation m x 1 + n x 16 amu, where m and n are an integer value of 0 or greater, except the case where both m and n are 0, although their presence is expected to be of the order of parts per million.

In summary, a fundamental novelty of this invention relates to the prediction, to be verified with direct measurements by independent laboratories outlined below, that the HHO gas is constituted by:
i) two primary species, one with 2 amu (representing a mixture of HxH and H-H) in large percentage yet less than 66% in volume, and a second one with 32 amu (representing a mixture of OxO and O-O) in large percentage yet less than 33% in volume;
ii) new species in smaller yet macroscopic percentages estimated to be in the range of 8%-9% in volume comprising: 1 amu representing isolated atomic hydrogen; 16 amu representing isolated atomic oxygen; 18 amu representing H-O-H and HxH-O; 33 amu representing a mixture of HxOxO and HxO-O; 36 amu representing a mixture of HxH-O-OxHxH and similar configurations; and 37 amu representing a mixture of HxH-O-OxHxHxH and equivalent configurations; plus
iii) traces of new species comprising: 3 amu representing a mixture of HxHxH and HxH-H; 4 amu representing a mixture of H-HxH-H and equivalent configurations; and numerous additional possible species in part per million with masses bigger than 17 amu characterized by the equation n x 1 + m x 16, where n and m can have integer values 1, 2, 3, and so on.

The preceding theoretical considerations can be unified in the prediction that the HHO combustible gas is composed of hydrogen and oxygen atoms bonded into clusters HₘOₙ in which m and n have integer values with the exclusion of the case in which both m and n are zero. In fact: for m = 1, n = 0 we have atomic hydrogen H; for m = 0, n = 1, we have atomic oxygen O; for m = 2 and n = 0 we have the ordinary hydrogen molecule H₂ = H-H or the magnecule HxH; for m = 0 and n = 2 we have the ordinary oxygen molecule O₂ = O-O or the magnecule OxO; for m = 1, n = 1 we have the radical H-O or the magnecule HxO; for m = 2 n = 1 we have water vapor H-O-H or the predicted new species of water (Fig. 3b) HxH-O; for m = 3, n = 2 we have the magnecules HxH-O-H or HxHxH-O; for m = 3, n = 3 we have the magnecules HxHxH-OxO or (H-O-H)xO; and so on.

As we shall see below, "all" the above predicted magnecular clusters have been identified experimentally, thus confirming the representation of the chemical structure of the HHO combustible gas with the symbol HₘOₙ where m and n assume integer values with the exception of both m and n being 0.

The above definition of the HHO gas establishes its dramatic difference with the Brown gas in a final form.

### OUTLINE OF THE EXPERIMENTAL EVIDENCE:

On June 30, 2003, scientific measurements on the specific weight of the HHO gas were conducted at Adsorption Research Laboratory in Dublin, Ohio. The resultant value was 12.3 grams per mole. The same laboratory repeated the measurement on a different sample of the gas and confirmed the result.

The released value of 12.3 grams per mole is anomalous. The general expectation is that the HHO gas consists of a mixture of H2 and O2 gases since the gas is produced from water. This implies a mixture of H2 and O2 with the specific weight (2+2+32)/3 = 11.3 grams per mole corresponding to a gas that is composed in volume of 66.66% H2 and 33.33% O2.

Therefore, we have the anomaly of 12.3 - 11.2 = 1 gram per mole, corresponding to 8.8 % anomalous value of the specific weight. Therefore, rather than the predicted 66.66% of H2 the gas contains only 60.79 % of the species with 2 amu, and rather than having 33.33% of O2 the gas contains only 30.39 of the species with 32 amu.

These measurements provide direct experimental confirmation that the HHO gas is not composed of a sole mixture of H2 and O2, but has additional species. Moreover, the gas was produced from distilled water. Therefore, there cannot be an excess of O2 over H2 to explain the increased weight. Therefore, the above measurements establish the presence in HHO of 5.87% of H2 and 2.94% O2 bonded together into species heavier than water to be identified via mass spectroscopy.

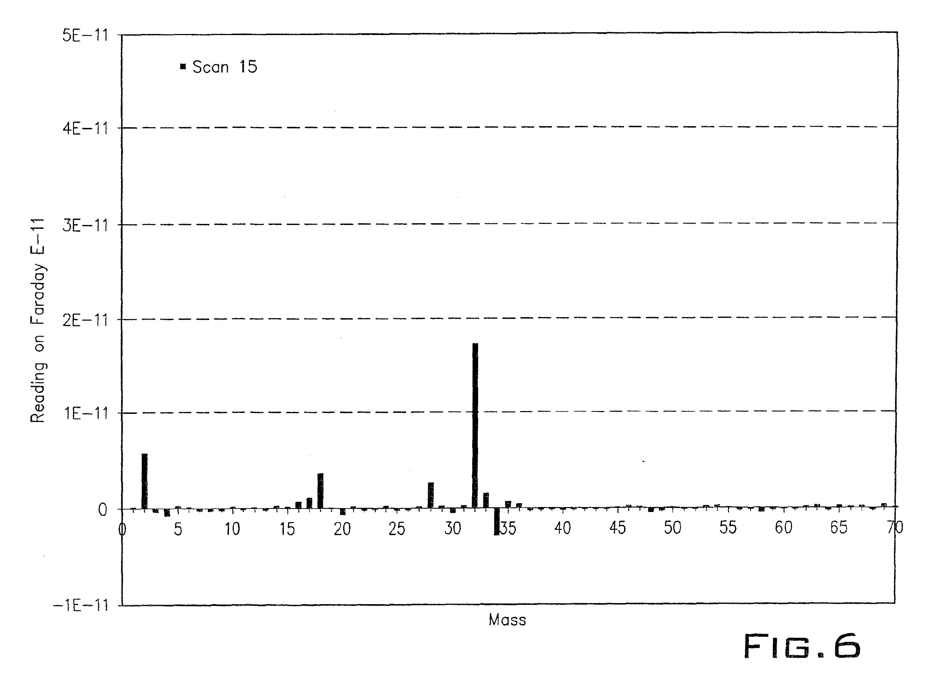

Adsorption Research Laboratory also conducted gas chromatographic scans of the HHO gas reproduced in Figure 6 confirming most of the predicted constituents of this invention. In fact, the scans of Figure 6 confirm the presence in the HHO gas of the following species here presented in order of their decreasing percentages:
1) A first major species with 2 amu representing hydrogen in the above indicated indistinguishable combination of magnecular HxH and molecular H-H versions;
2) A second major species with 32 amu representing the above indicated combination of the magnecular species OxO and the molecular one O-O;
3) A large peak at 18 amu that is established by other measurements below not to be water, thus leaving as the only rational explanation the new form of water HxH-O at the foundation of this invention;
4) A significant peak with 33 amu that is a direct experimental confirmation of the new species in the HHO gas given by HxH-OxH;
5) A smaller yet clearly identified peak at 16 amu representing atomic oxygen;
6) Other small yet fully identified peaks at 17 amu, confirming the presence of the mixture of the magnecule HxO and radical H-O;
7) A small yet fully identified peak at 34 amu confirming the presence of the new species (H-O)x(H-O);
8) A smaller yet fully identified peak at 35 amu confirming the prediction of the new species (H-O)x(H-O)xH; and
9) numerous additional small peaks expected to be in parts per million.

It should be added that the operation of the IR detector was halted a few seconds following the injection of the HHO gas, while the same instrument was operating normally with other gases. This occurrence is a direct experimental verification of the magnetic features of the HHO gas because the behavior can only be explained by the clogging up of the feeding line by the HHO gas via its anomalous adhesion to the internal walls of the line due to magnetic induction, clogging that progressively occurred up to the point of preventing the gas to be injected into the instrument due to the small sectional area of the feeding line, with consequential halting of the instrument.

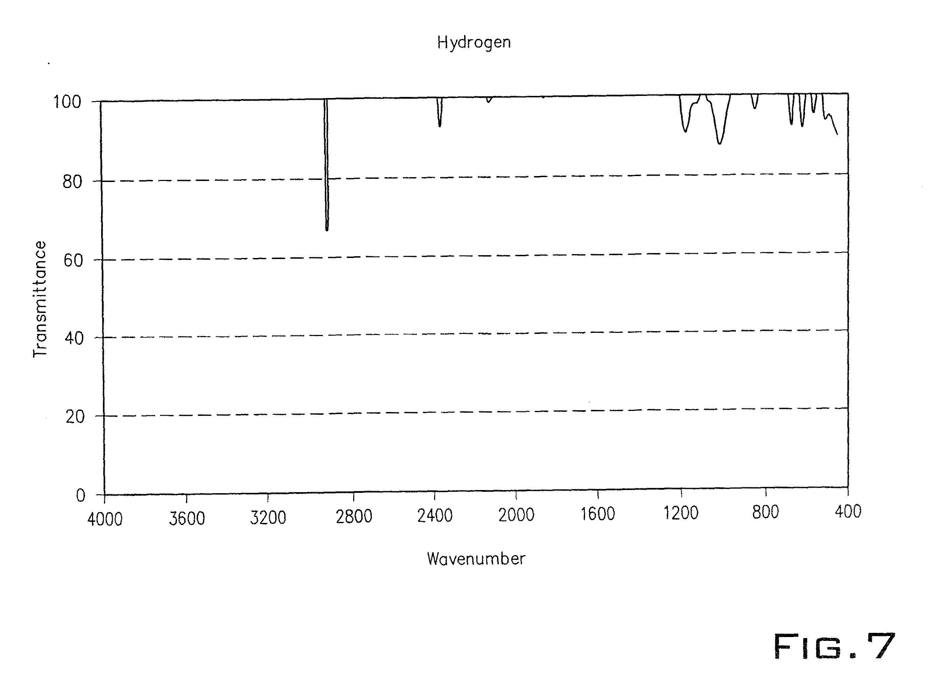

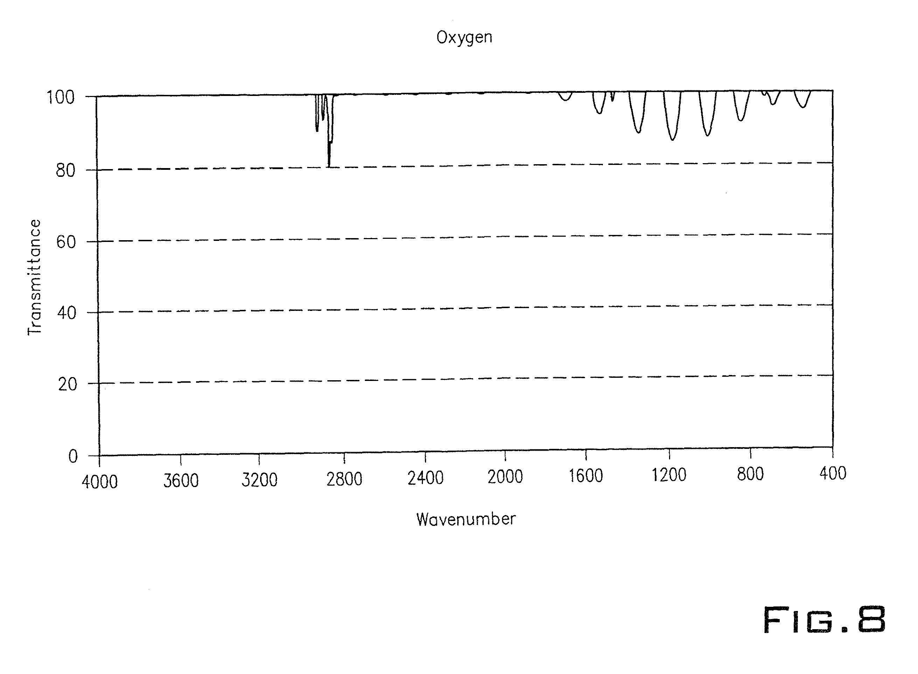

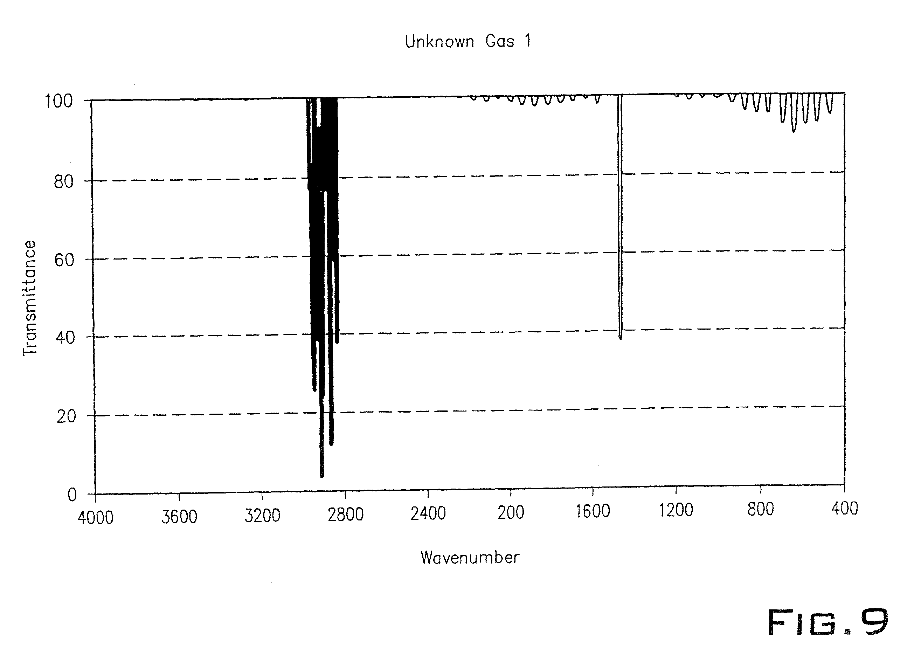

On July 22, 2003, the laboratory of the PdMA Corporation in Tampa, Florida conducted infrared scans reported in Figures 7, 8 and 9 via the use of a Perkin-Elmer InfraRed (IR) scanner with fixed point/single beam, model 1600. The reported scans refer to 1) a conventional H2 gas (Figure 7); 2) a conventional O2 gas (Figure 8); and 3) the HHO gas (Figure 9).

The inspection of these scans shows a substantial difference between HHO gas and H2 and O2 gases. H2 = H-H and O2 = O-O are symmetric molecules. Therefore, they have very low IR peaks, as confirmed by the enclosed scans. The first anomaly of HHO is that of showing comparatively much stronger resonating peaks. Therefore, the enclosed IR scan of HHO first establish that the HHO gas has an asymmetric structure, that is a rather remarkable feature since the same feature is absence for the presumed mixture if H2 and O2 gases.

Moreover, H2 and O2 gases can have at most two resonating frequencies each, under infrared spectroscopy, one for the vibrations and the other for rotations. Spherical distributions of orbitals and other features imply that H2 has essentially only one dominant IR signature as confirmed by the scan of Figure 7, while O2 has one vibrational IR frequency and three rotational ones, as also confirmed by the scans of Figure 8.

The inspection of the IR scans for the HHO gas in Figure 9 reveals additional novelties of this invention. First the HHO scan reveals the presence of at least nine different IR frequencies grouped around wavenumber 3000 plus a separate distinct one at around wavenumber 1500.

These measurements provide the very important experimental confirmation that the species with 18 amu detected in the IR scans of Figure 6 is not given by water, thus leaving as the only possibility a direct experimental verification of the fundamental novel species HxH-O of this invention.

In fact, the water vapor with molecules H-O-H has IR frequencies with wavelengths 3756, 3657, 1595, their combination and their harmonics (here ignored for simplicity). The scan for the HHO gas in Figure 7 confirms the presence of an IR signature near 1595, thus confirming the molecular bond H-O in the magnecular structure HxH-O, but the scan shows no presence of the additional very strong signatures of the water molecules at 3756 and 3657, thus establishing the fact that the peak at 18 amu is not water as conventionally understood in chemistry.

On July 22, 2003, the laboratory of the PdMA Corporation in Tampa, Florida conducted measurements on the flash point, first on commercially available diesel fuel, measuring a flash point of 75 degrees C, and then of the same fuel following the bubbling in its interior of the HHO gas, measuring the flash point of 79 degrees C.

These measurements too are anomalous because it is known that the addition of a gas to a liquid fuel reduces its flash point generally by half, thus implying the expected flash value of about 37 degrees C for the mixture of diesel and HHO gas. Therefore, the anomalous increase of the flash point value is not of 4 degrees C, but of about 42 degrees C.

Such an increase cannot be explained via the assumption that HHO is contained in the diesel in the form of a gas, and requires the necessary occurrence of some type of bond between the HHO gas and the liquid fuel. The latter cannot possibly be of valence type, but it can indeed be of magnetic type due to induced polarization of the diesel molecules by the polarized HHO gas and consequential adhesion of the constituents of the HHO gas to the diesel molecule.

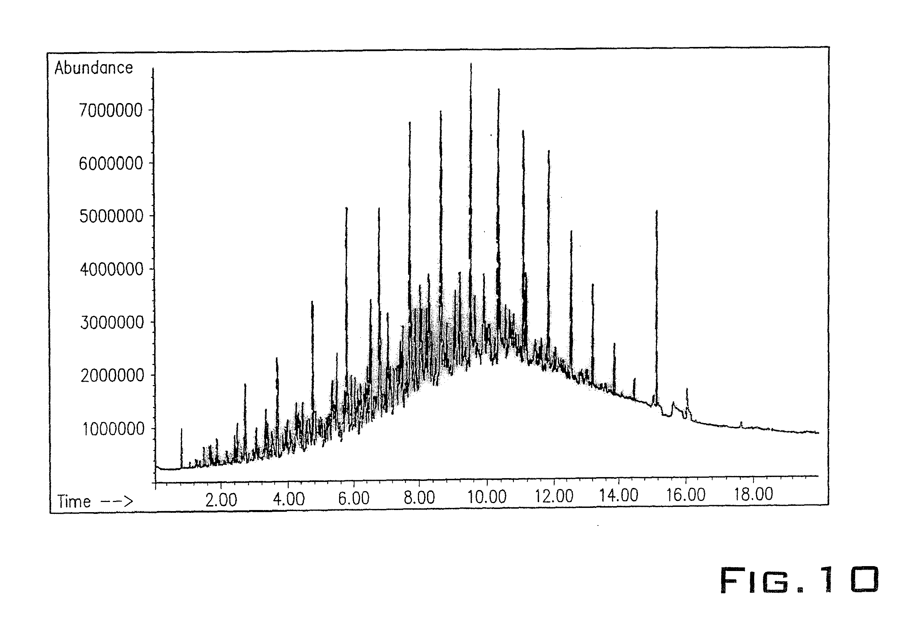

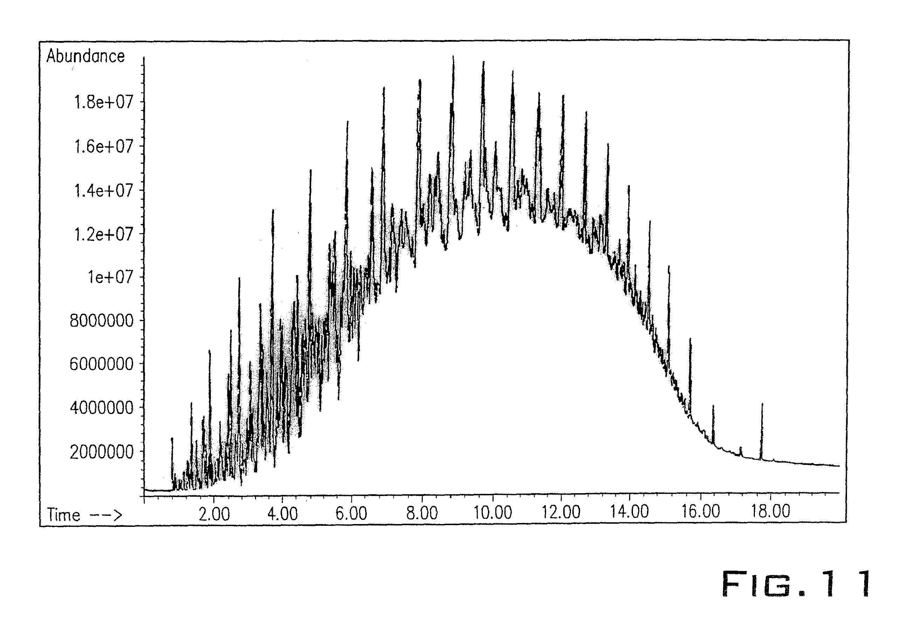

A major experimental confirmation of the latter bond was provided on August 1, 2003, by the Southwest Research Institute of Texas, that conducted mass spectrographic measurements on one sample of ordinary diesel marked "A" as used for the above flash point value of 75 degrees C, here reported in Figure 10, and another sample of the same diesel with HHO gas bubbled in its interior marked "B", here reported in Figure 11.

The measurements were conducted via a Total Ion Chromatogram (TIC) via Gas Chromatography Mass Spectrometry GC-MS manufactures by Hewlett Packard with GC model 5890 series II and MS model 5972. The TIC was obtained via a Simulated Distillation by Gas Chromatography (SDGC).

The used column was a HP 5MS 30 x 0.25 mm; the carrier flow was provided by Helium at 50 degrees C and 5 psi; the initial temperature of the injection was 50 degrees C with a temperature increase of 15 degrees C per minute and the final temperature of 275 degrees C.

The chromatogram of Figure 10 confirmed the typical pattern, elusion time and other feature of commercially available diesel. However, the chromatograph of the same diesel with the HHO gas bubbled in its interior of Figure 11 shows large structural differences with the preceding scan, including a much stronger response, a bigger elusion time and, above all, a shift of the peaks toward bigger amu values.

Therefore, the latter measurements provide additional confirmation of the existence of a bond between the diesel and the HHO gas, precisely as predicted by the anomalous value of the flash point. In turn such a bond between a gas and a liquid cannot possibly be of valence type, but can indeed be of magnetic type via induced magnetic polarization of the diesel molecules and consequential bond with the HHO magnecules.

In conclusion, the experimental measurements of the flash point and of the scans of Figures 10 and 11 establish beyond doubt the existence in the HHO gas of a magnetic polarization that is the ultimate foundation of this invention.

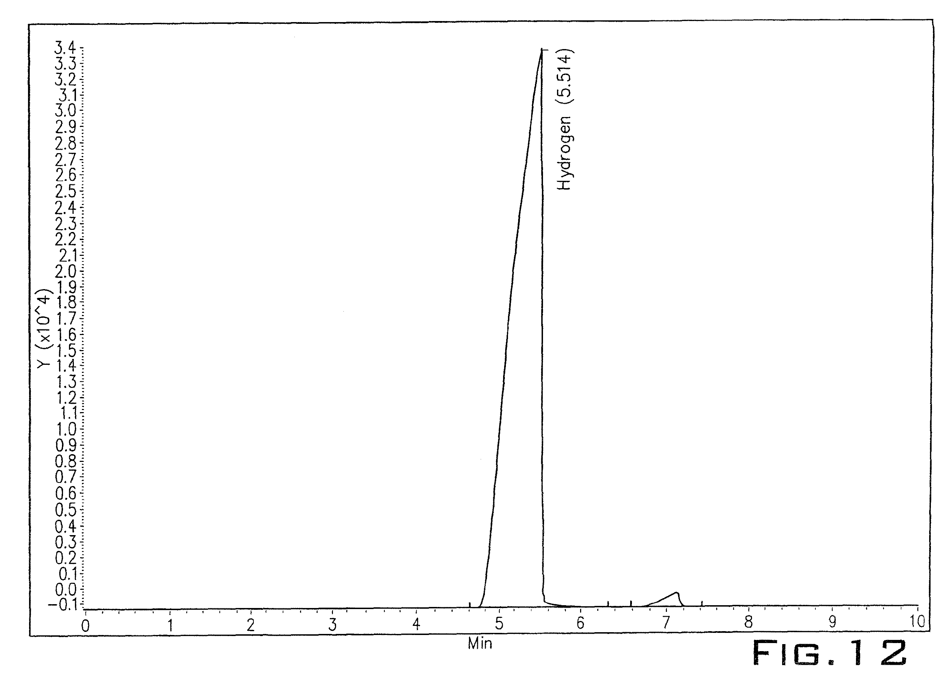

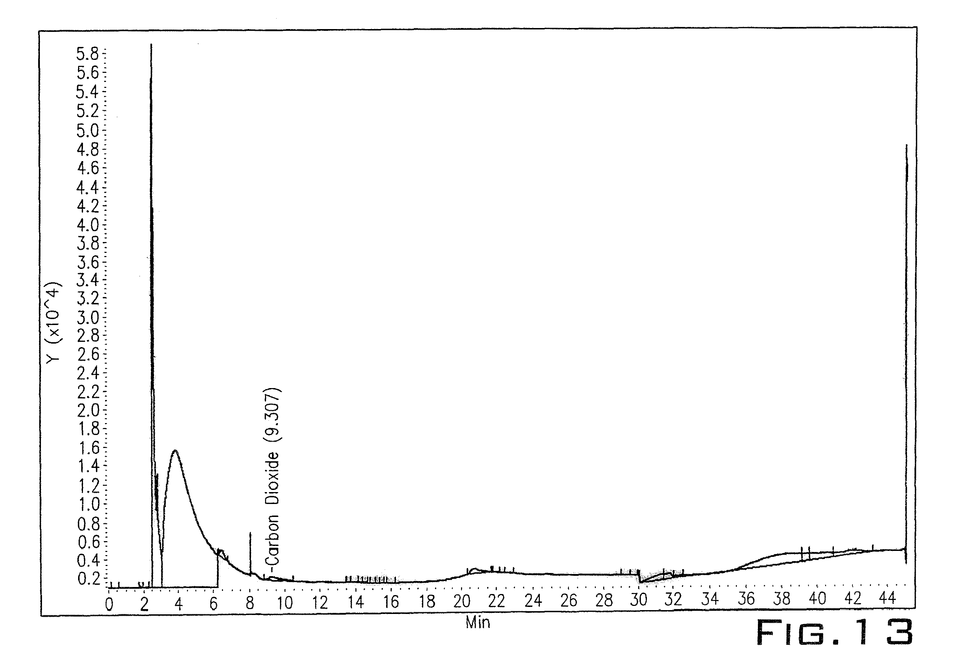

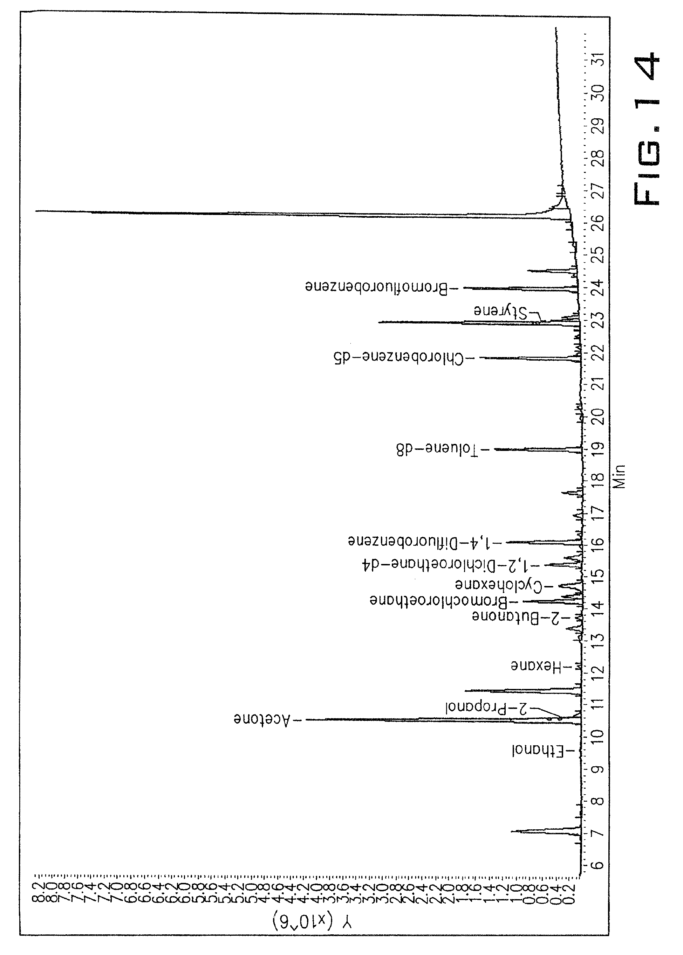

Additional chemical analyses on the chemical composition of the HHO gas were done by Air Toxic LTD of Folsom, California via the scans reproduced in Figures 12, 13 and 14 resulting in the confirmation that H2 and O2 are the primary constituents of the HHO gas. However, the same measurements imply the identification of the following anomalous peaks:
a) A peak in the H2 scan at 7.2 minutes elusion times (Figure 12);
b) A large peak in the O2 scan at 4 minutes elusion time (Figure 13); and
c) A number of impurities contained in the HHO gas (Figure 14).

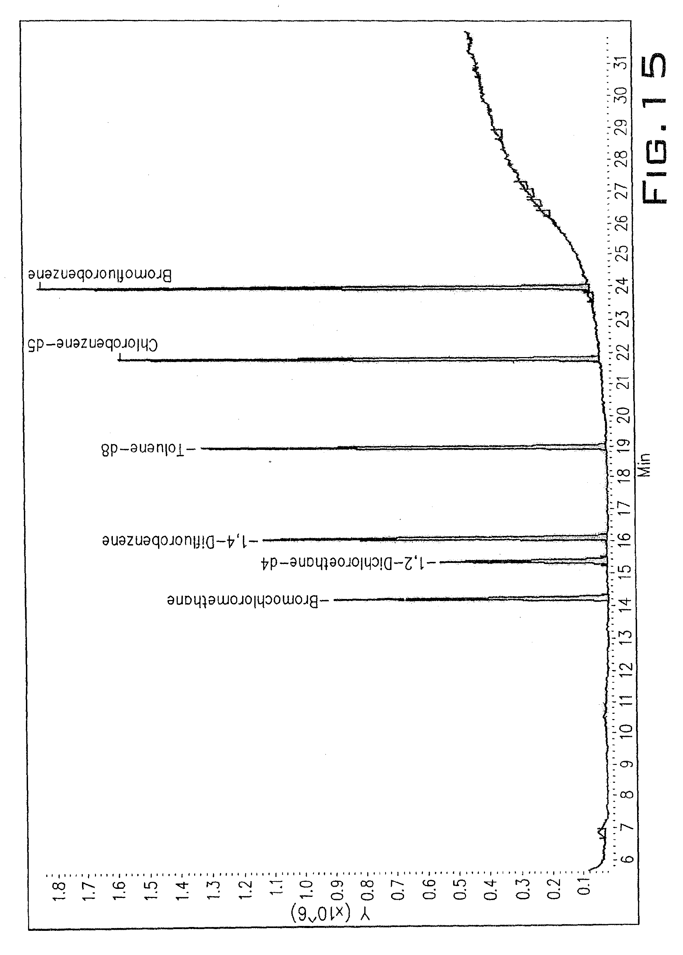

Figure 15 depicts the anomalous blank of the detector since it shows residual substances following the removal of the gas. The blank following the removal of the HHO gas is anomalous because it shows the preservation of the peaks of the preceding scans, an occurrence solely explained by the magnetic polarization of species and their consequential adhesion to the interior of the instrument via magnetic induction.

Unfortunately, the equipment used in the scans of Figures 12, 13, 14 cannot be used for the identification of atomic masses and, therefore, the above anomalous peaks remain unidentified in this test.

Nevertheless, it is well know that species with bigger mass elude at a later time. Therefore, the very presence of species eluding after the H₂ and the O₂ detection is an additional direct experimental confirmation of the presence in the HHO gas of species heavier than H₂ and O₂, thus providing additional experimental confirmation of the very foundation of this invention.

Final mass spectrographic measurements on the HHO gas were done on September 10, 2003, at the SunLabs, located at the University of Tampa in Florida via the use of the very recent GC-MS Clarus 500 by Perkin Elmer, one of the most sensitive instruments capable of detecting hydrogen.

Even though the column available at the time of the test was not ideally suited for the separation of all species constituting HHO, the measurements have fully confirmed the predictions i), ii) and iii) above on the structure of the HHO gas.

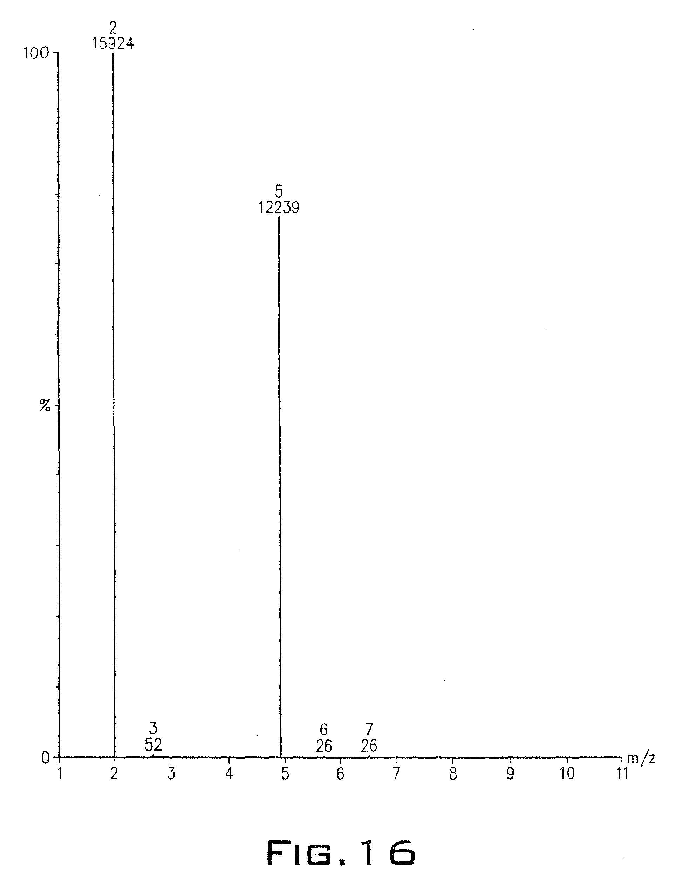

In fact, the Scan of Figure 16 confirms the presence in HHO of the basic species with 2 amu representing H-H and HxH, although their separation was not possible in the Clarus 500 GC-MS. The same instrument also cannot detect isolated hydrogen atoms due to insufficient ionization. The species with 4 amu representing H-HxH-H could not be detected because helium was the carrier gas and the peak at 4 amu had been subtracted in the scan of Figure 16. Note however the presence of a clean species with 5 amu that can only be interpreted as H-HxH-HxH.

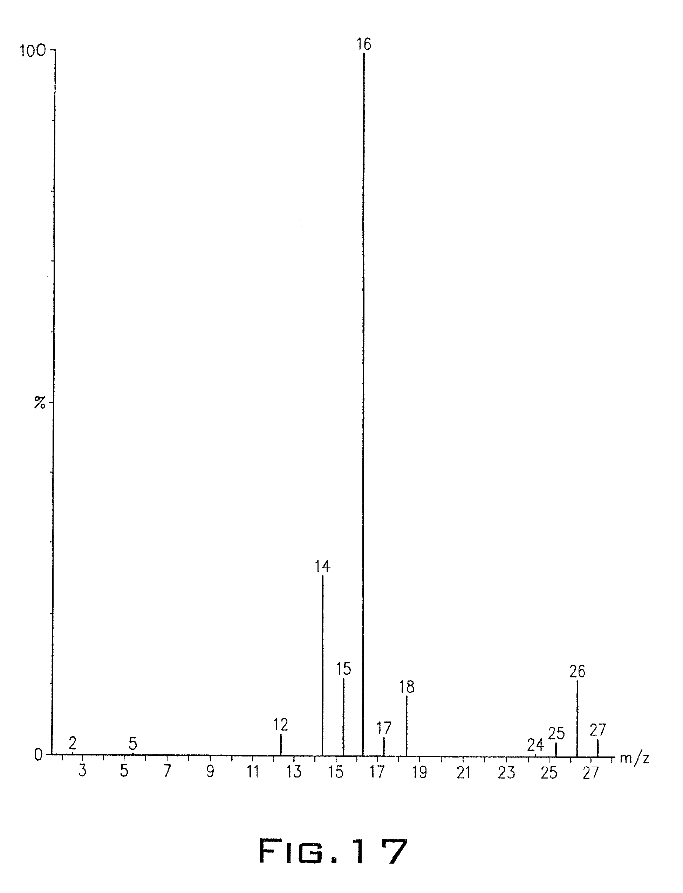

The scan of Figure 17 provides clear evidence of a species with mass 16 amu that confirms the presence in HHO of isolated atomic oxygen, thus providing an indirect confirmation of the additional presence of isolated hydrogen atoms due to the impossibility of their detection in the instrument. The same scan of Figure 17 confirms the presence in HHO of the species H-O with 17 amu and the species with 18 amu consisting of H-O-H and HxH-O, whose separation is not possible in the instrument here considered.

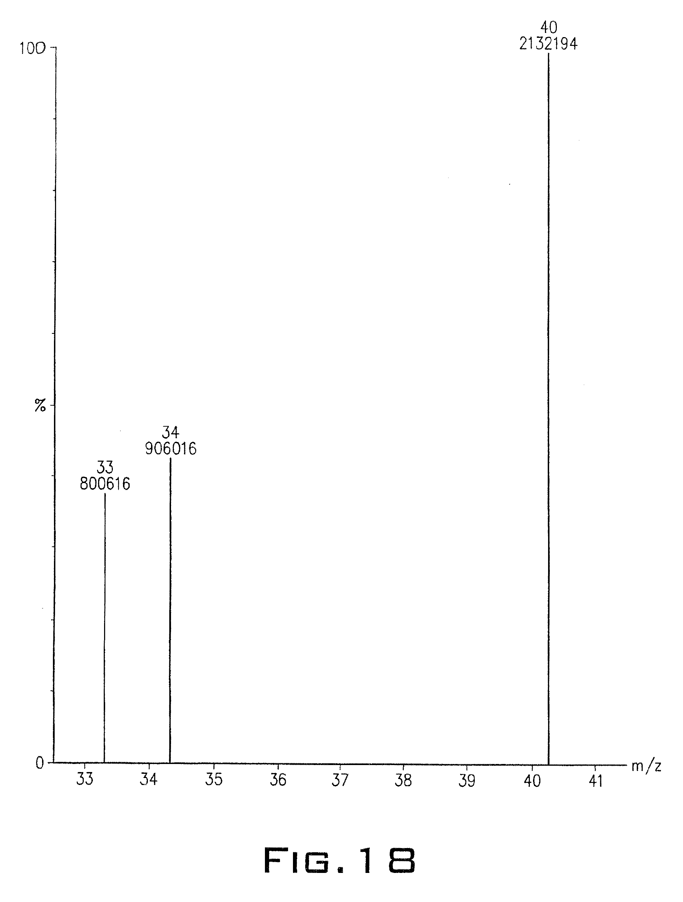

The scan of Figure 18 clearly establishes the presence in HHO of the species with 33 amu representing O-OxH or O-O-H, and 34 amu representing O-HxO-H and similar configurations, while the species with 35 amu detected in preceding measurements was confirmed in other scans.

The test also confirmed the "blank anomaly" typical of all gases with magnecular structure, namely, the fact that the blank of the instrument following the removal of the gas continues to detect the basic species, which scan is not reproduced here for simplicity, thus confirming the anomalous adhesion of the latter to the instrument walls that can only be explained via magnetic polarization.

In conclusion, all essential novel features of this invention are confirmed by a plurality of direct experimental verifications. In fact:
I) The excess in specific weight of 1 gram/mole (or 8.8%) confirms the presence of species heavier than the predicted mixture of H₂ and O₂, thus confirming the presence of a species composed of H and O atoms that cannot possibly have a valence bond.
II) The IR scans done by Adsorption Research (Figure 6) clearly confirm all new species above predicted for the HHO gas, thus providing a basic direct experimental verification of this invention;
III) The halting of the IR instrument in the scans of Figure 6 after one or two seconds following the injection of HHO, while the same instrument works normally for conventional gases, is a direct experimental confirmation of the presence of magnetic polarization in the HHO gas, as routinely detected also for all gases having a magnecular structure, and it is due to the clogging of the feeding line by the HHO species via magnetic induction with consequential adhesion to the walls of the feeding line, consequential impossibility for the gas to enter in the instrument, and subsequent automatic shut off of the instrument itself.
IV) The large increase of the flash point of diesel fuel following inclusion of the HHO gas also constitutes direct clear experimental evidence of the magnetic polarization of the HHO gas since it provides the only possible explanation, namely, a bond between a gas and a liquid that cannot possibly be of valence type, but that can indeed be of magnetic type due to magnetic induction.
V) The mass spectrometric measurements on the mixture of diesel and HHO (Figures 10 and 11) provide final experimental confirmation of the bond between HHO and diesel. In turn, this bond establishes the capability of the species in HHO to polarize via magnetic induction other atoms, thus confirming the chemical composition of the HHO gas.
VI) The additional scans of Figure 12-18 confirms all the preceding results, including the anomalous blank following the removal of the HHO gas that confirms the magnetic polarization of the HHO gas at the foundation of this invention.
VII) The capability by the HHO gas to melt instantaneously tungsten and bricks is the strongest visual evidence on the existence in the HHO gas of isolated and magnetically polarized atoms of hydrogen and oxygen, that is, atoms with a much reduced "thickness" that allows their increased penetration within the layers of other substances, plus the added penetration due to magnetic induction, a feature typical of all gases with magnecular structure.

It should be noted that the above experimental verifications confirm in full the representation of the HHO combustible gas with the symbol HₘOₙ where m and n assume integer values with the exception in which both m and n have the value 0. In fact, the various analytic measurements reported above confirm the presence of: atomic hydrogen H (m = 1, n = 0); atomic oxygen O (m = 0, n = 1); hydrogen molecule H-H or magnecule HxH (m = 2, n = 0); oxygen molecule O-O or magnecule OxO (m = 0, n = 2); radical H-O or magnecule HxO (m = 1, n = 1); water vapor H-O-H or magnecule HxH-O (m = 2, n = 1); magnecule HxHxH-O or HxH-OxH (n = 3, n = 1); magnecule HxHxH-OxO or HxH-O-OxH (m = 3, n = 2); etc.

For ease in understanding the parts of an electrolyzer and operations functions of the parts, the following general definitions are provided.

The term "electrolyzer" as used herein refers to an apparatus that produces chemical changes by passage of an electric current through an electrolyte. The electric current is typically passed through the electrolyte by applying a voltage between a cathode and anode immersed in the electrolyte. As used herein, electrolyzer is equivalent to electrolytic cell.

The term "cathode" as used herein refers to the negative terminal or electrode of an electrolytic cell or electrolyzer. Reduction typically occurs at the cathode.

The term "anode" as used herein refers to the positive terminal or electrode of an electrolytic cell or electrolyzer. Oxidation typically occurs at the anode.

The term "electrolyte" as used herein refers to a substance that when dissolved in a suitable solvent or when fused becomes an ionic conductor. Electrolytes are used in the electrolyzer to conduct electricity between the anode and cathode.

The term "internal combustion engine" as used herein refers to any engine in which a fuel-air mixture is burned within the engine itself so that the hot gaseous products of combustion act directly on the surfaces of engine's moving parts. Such moving parts include, but are not limited to, pistons or turbine rotor blades. Internal-combustion engines include gasoline engines, diesel engines, gas turbine engines, jet engines, and rocket engines.

With reference to Figure 19, an exploded view of an electrolyzer is provided. Electrolyzer 2 includes electrolysis chamber 4 which holds an electrolyte solution. Electrolysis chamber 4 mates with cover 6 at flange 8. Preferably, a seal between chamber 4 and cover 6 is made by neoprene gasket 10 which is placed between flange 8 and cover 6. The electrolyte solution may be an aqueous electrolyte solution of water and an electrolyte to produce a mixture of the novel gases; however, to produce the novel inventive gases, distilled water preferably is used.

The electrolyte partially fills electrolysis chamber 4 during operation to level 10 such that gas reservoir region 12 is formed above the electrolyte solution. Electrolyzer 2 includes two principal electrodes - anode electrode 14 and cathode electrode 16 - which are at least partially immersed in the electrolyte solution. Anode electrode 14 and cathode electrode 16 slip into grooves 18 in rack 20. Rack 20 is placed inside chamber 4. One or more supplemental electrodes 24, 26, 28, 30 are also placed in rack 16 (not all the possible supplemental electrodes are illustrated in Figure 19.) Again, supplemental electrodes 24, 26, 28, 30 are at least partially immersed in the aqueous electrolyte solution and interposed between the anode electrode14 and cathode electrode 16. Furthermore, anode electrode14, cathode electrode 16, and supplemental electrodes 24, 26, 28, 30 are held in a fixed spatial relationship by rack 20. Preferably, anode electrode14, cathode electrode 16, and supplemental electrodes 24, 26, 28, 30 are separated by a distance of about 0.25 inches. Although the electrodes need not be flat, as depicted in Fig. 19, the electrodes are typically made of a generally flat material. The one or more supplemental electrodes allow for enhanced and efficient generation of this gas mixture. Preferably, there are from 1 to 50 supplemental electrodes interposed between the two principal electrodes. More preferably, there are from 5 to 30 supplemental electrodes interposed between the two principal electrodes, and most preferably, there are about 15 supplemental electrodes interposed between the two principal electrodes. Preferably, the two principal electrodes are each individually a metallic wire mesh, a metallic plate, or a metallic plate having one or more holes. More preferably, the two principal electrodes are each individually a metallic plate. A suitable metal from which the two principal electrodes are formed, includes but is not limited to, nickel, nickel containing alloys, and stainless steel. The preferred metal for the two electrodes is nickel. The one or more supplemental electrodes are preferably a metallic wire mesh, a metallic plate, or a metallic plate having one or more holes. More preferably, the one or more supplemental electrodes are each individually a metallic plate. A suitable metal from which the supplemental electrodes are formed, includes but is not limited to, nickel, nickel containing alloys, stainless steel and foam based material as described above in the summary of the invention section.

Still referring to Figure 19, during operation of electrolyzer 2 a voltage is applied between anode electrode 14 and cathode electrode 16 which causes the novel gas to be produced and which collects in gas reservoir region 12. The gaseous mixture exits gas reservoir region 12 from through exit port 31 and ultimately is fed into the fuel system of an internal combustion engine. Electrical contact to anode electrode 14 is made through contactor 32 and electrical contact to cathode electrode 16 is made by contactor 33. Contactors 32 and 33 are preferably made from metal and are slotted with channels 34, 35 such that contactors 32, 33 fit over anode electrode 14 and cathode electrode 16. Contactor 32 is attached to rod 37 which slips through hole 36 in cover 6. Similarly, contactor 33 is attached to rod 38 which slips through hole 40 in cover 6. Preferable holes 36, 40 are threaded and rods 37, 38 are threads rods so that rods 37, 38 screw into holes 36, 40. Contactors 32 and 33 also hold rack 20 in place since anode electrode 14 and cathode electrode 16 are held in place by channels 34,35 and by grooves 18 in rack 20. As can be seen, contactors 32,33, rack 20, grooves 18 and channels 34,35 all serve as retaining means to retain the electrodes in place and parallel to each other. Accordingly, when cover 6 is bolted to chamber 4, rack 20 is held at the bottom of chamber 4. Electrolyzer 2 optionally includes pressure relief valve 42 and level sensor 44. Pressure relief 42 valve allows the gaseous mixture in the gas reservoir to be vented before a dangerous pressure buildup can be formed. Level sensor 44 ensures that an alert is sounded and the flow of gas to the vehicle fuel system is stopped when the electrolyte solution gets too low. At such time when the electrolyte solution is low, addition electrolyte solution is added through water fill port 46. Electrolyzer 2 may also include pressure gauge 48 so that the pressure in reservoir 4 may be monitored. Finally, electrolyzer 2 optionally includes one or more fins 50 that serve as an external heat sink, which removes heat from electrolyzer 2. As can be surmised from Fig. 19 and the above description, the electrolyzer described above is used in a closed or pressurized system under a suitable working pressure for the lines and components connected to the electrolyzer.

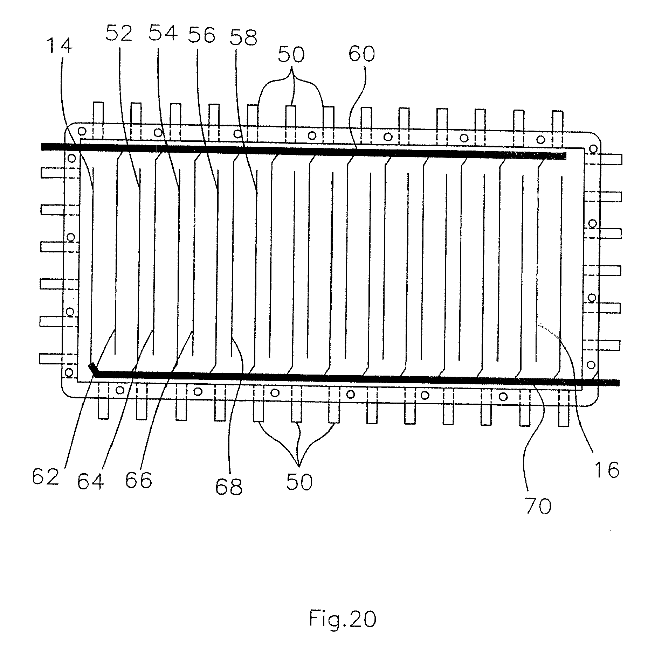

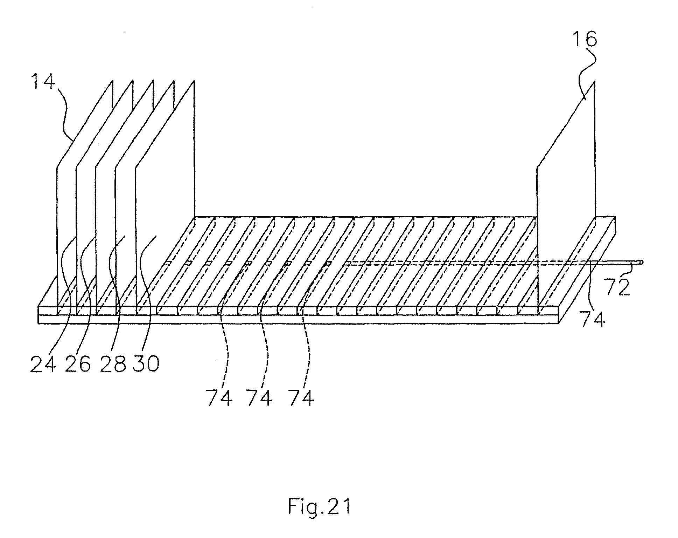

With reference to Fig. 20, a variation of an electrolyzer is provided. In Fig. 19, the supplemental electrodes are not electrically connected to each other. Power is to the anode and cathode only respectively. In the Fig. 20 embodiment, a first group of the one or more supplemental electrodes 52, 54, 56, 58 is connected to anode electrode 14 with a first metallic conductor 70 and a second group of the one or more supplemental electrodes 62, 64, 66, 68 is connected to cathode electrode 16 with second metallic conductor 60. As in Fig. 19, the supplemental electrodes may be made from the foam based material described above as well and further, the configuration may be similar with alternating stainless steel based electrodes and the foam based electrodes similar to electrode arrangement of the electrolyzer of Fig. 19. With reference to Figure 21, a perspective view showing the electrode plate securing mechanism is provided. Anode electrode14, cathode electrode 16, and supplemental electrodes 24, 26, 28, 30 are held to rack 20 by holder rod 72 which slips through channels 74 in rack 20 and holes in the electrodes (not all the possible supplemental electrodes are illustrated in Figure 3.)

Rack 20 is preferably fabricated from a highly dielectric plastic such as PVC, polyethylene or polypropylene. Furthermore, rack 20 holds anode electrode 14, cathode electrode 16, and supplemental electrodes 24, 26, 28, 30 in a fixed spatial relationship. Preferably, the fixed spatial relationship of the two principal electrodes and the one or more supplemental electrodes is such that the electrodes (two principal and one or more supplemental) are essentially parallel and each electrode is separated from an adjacent electrode by a distance from about 0.38 cm (0.15 inches) to about 0.89 cm (0.35 inches). More preferably, each electrode is separated from an adjacent electrode by a distance from about 4.2 to about 0.3 inches, and most preferably about 0.25 inches. The fixed spatial relationship is accomplished by a rack that holds the two principal electrodes and the one or more supplemental electrodes in the fixed spatial relationship. The electrodes sit in grooves in the rack which define the separations between each electrode. Furthermore, the electrodes are removable from the rack so that the electrodes or the rack may be changed if necessary. Finally, since rack 20 and anode electrode 14 and cathode electrode 16 are held in place as set forth above, the supplemental electrodes are also held in place because they are secured to rack 20 by holder rod 72.

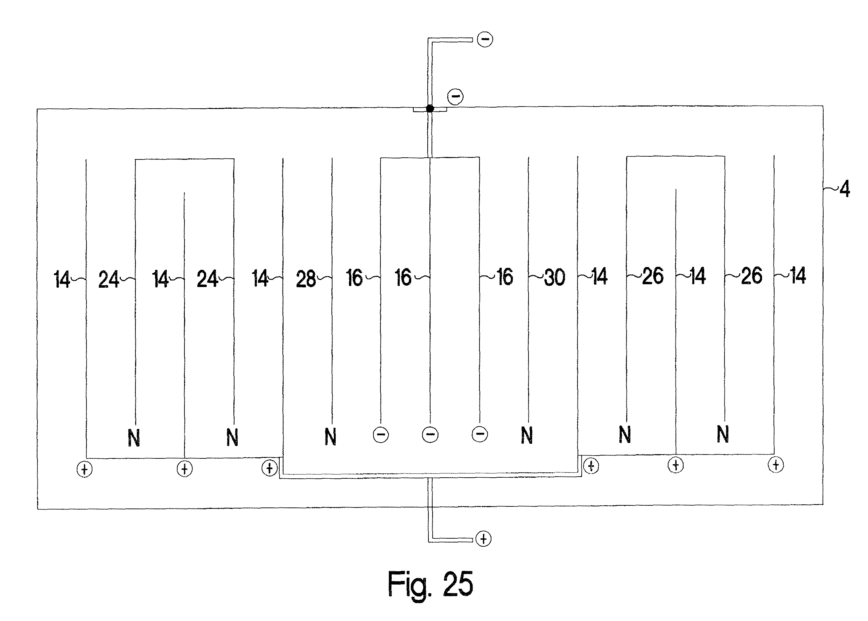

In a still preferred variant of the electrode configurations of Figs. 19 and 20, Fig. 25 conceptually depicts an alternative arrangement where power is connected to a plurality of anodes 14 and cathodes 16 with the supplemental electrodes 24,26,28,30..., being neutral and not connected to a power source. The supplemental electrodes are located between anode electrode plates 14, between cathode electrode plates 16 or between cathode and anode electrode plates 14,16 as desired and the power is grounded to the electrolyzer chamber housing 4. In this configuration, equalized voltages are found to exist across the plates.

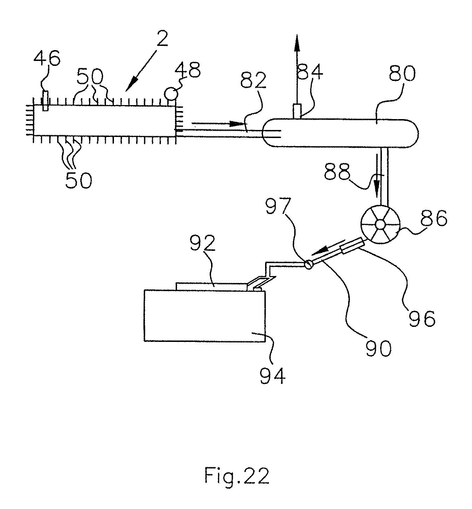

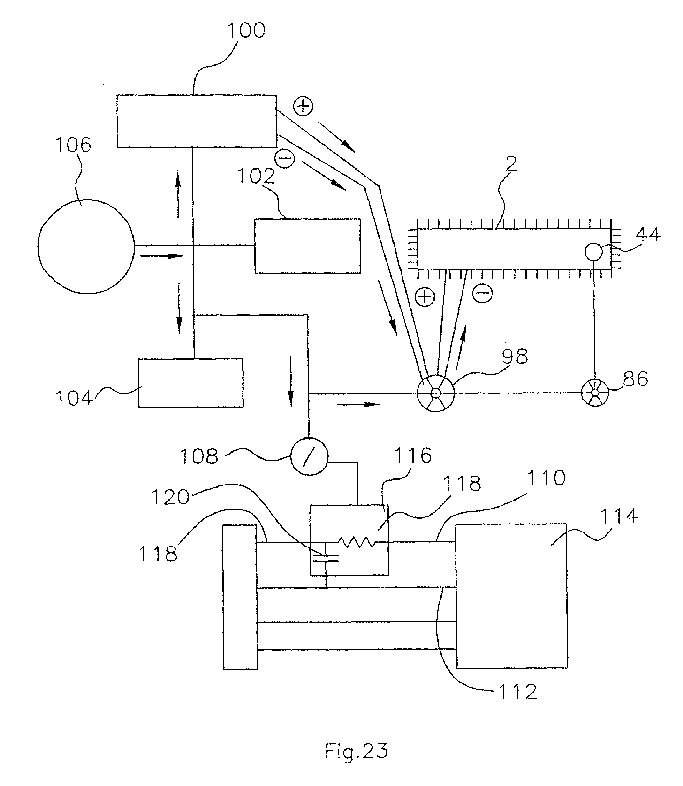

With reference to Figures 22 and 23, a schematic of the plumbing and electrical operation of an electrolyzer is depicted for an application with an internal combustion engine. During operation, the novel combustible gas is formed by the electrolysis of the electrolyte solution in electrolyzer 2. Electrolyzer 2 is connected to collection tank 80 by pressure line 82. The gases are collected and temporarily stored in collection tank 80. Collection tank 80 optionally includes pressure relief valve 84 to guard against any dangerous pressure build up. Collection tank 80 is connected to solenoid 86 by pressure line 88. Solenoid 86 is in turn connected by pressure line 90 to engine intake manifold 92 of engine 94. Optionally, flash arrestor 96 is incorporated in pressure line 90 to prevent a flame from propagating in tube 88. Furthermore, pressure line 90 also includes orifice 97 to regulate the flow of the gaseous mixture into intake manifold 92. The size of this orifice will depend on the size of the engine. For example, an orifice diameter of about 0.04 is suitable for a 1 liter engine, about 0.06 inches is suitable for a 2.5 liter engine, and about 0.075 inches is suitable for a V8 engine. The applied voltage to electrolyzer 2 is provided through solenoid 98 by electrolyzer battery 100. When the pressure in collection tank 80 drops below about 25 psi, solenoid 98 switches and a voltage of about 12 V is applied between the anode electrode and cathode electrode of electrolyzer 2. Battery isolator 102 allows for charging of vehicle battery 104 and electrolyzer battery 100 by alternator 106 while keeping electrolyzer battery 100 and vehicle battery 104 electrically isolated. Furthermore, solenoid 98 is powered by vehicle battery 104 when main switch 108 is activated. Gas mixer solenoid 86 is also powered by vehicle battery 104 and opens when the gas mixture is provided to intake manifold 92. Solenoid 86 also receives feedback from level sensor 44 which causes solenoid 86 to shut off gas flow if the electrolyte solution level in electrolyzer 2 gets too low. Finally, when the method and apparatus of the present invention are used in a vehicle, the operation of the vehicle's oxygen sensor needs to be adjusted to take into account the additional oxygen that is added to the fuel system from the electrolyzer. Normally, if the oxygen sensor senses more oxygen, the vehicle's computer would determine that the engine is running lean and open up the fuel injectors to a richer fuel mixture. This is undesirable and would cause poor fuel economy. Electrical lines 110, 112 of oxygen sensor 114 preferably include RC circuit 116. RC circuit 116 includes resistor 118 and capacitor 120. Preferably, resistor 118 is about 1 megaohm and capacitor 120 is about 1 microfarad. Electrical line 110 is the check engine light signal and electrical line 112 carries the control signal that is related to the amount of oxygen in a vehicle exhaust. Resistor 118, which is in series in electrical line 110, ensures that the vehicle control system interprets the oxygen sensor as operating correctly. Similarly, capacitor 120 provides the vehicle's computer with a signal such that the vehicles fuel injectors do not incorrectly open when the gas from electrolyzer 100 is being supplied to the fuel system. Finally, main switch 108 switches RC circuit in when gas is being supplied (i.e., the electrolyzer is being used) and out when gas is not being supplied.

In another embodiment of the present invention, a method for increasing the fuel efficiency of an internal combustion engine is provided. The method of this embodiment utilizes the electrolyzer described above in conjunction with an internal combustion engine. Specifically, the method comprises providing an electrolyzer equipment described above or as further described below in other novel embodiments; applying an electrical potential between the electrodes wherein the novel combustible gas described herein is generated and collected in the gas reservoir region and wherein the electrolyzer is adapted to deliver the combustible gas to the fuel system of an internal combustion engine; and combining the combustible gas produced with fuel in the fuel system of an internal combustion engine. The step of adjusting the operation of an oxygen sensor as set forth above is also provided.

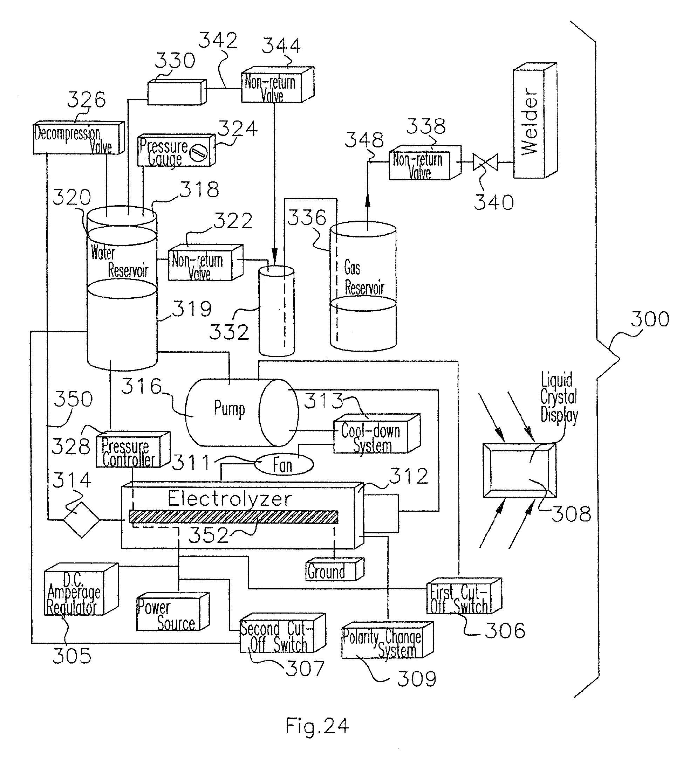

Referring to Fig. 24, which is a flow diagram of another embodiment 300 of a gas (hydrogen and oxygen) electrolyzer generator system depicted in the figure as being used integrally with a welder/cutting torch type of equipment. This system can also be used in other types of equipment where heat/combustion is desired. This system 300 comprises an electrolyte reservoir 318, having a top and a bottom, containing electrolytic fluid 319 therein. The fluid herein is preferably water. The electrolyte reservoir 318 comprises a broken or permeable plate 320 which is sealably and circumferentially positioned around a top end of the electrolyte reservoir 318. Plate 320 functions to release gas pressure within the electrolyte reservoir 318 when exceeding a pre-determined safety level.

The self-producing hydrogen and oxygen gas generating system 300 further comprises a pump 316, preferably an electromagnetic pump, which is connected at one distal end to the bottom of the electrolyte reservoir 318. Pump 316 is connected at an opposite distal end to at least one hydrogen and oxygen electrolyzer/generator 312 containing an electrical conductor 352 therein. The electrical conductor 352 is electrically connected on one distal end to an electrical ground. The opposite distal end of the electrical conductor 352 is electrically connected to one distal end of a pressure controller 328. The opposite distal end of the electrical conductor 352 is electrically connected to a power source. Pump 316 functions to circulate electrolytic fluid 319 from the electrolyte reservoir 318 through at least one hydrogen and oxygen electrolyzer/generator 312 through a radiator 314 back into the electrolyte reservoir 318 via a gas pipe 350. The radiator 314 functions to cool the generated hydrogen and oxygen gas before returning to the electrolyte reservoir 318.

The pressure controller 328 is connected to the electrolyte reservoir 318 and monitors the pressure therein. When gas pressure within the electrolyte reservoir 318 exceeds a pre-determined level, electrical current is terminated to the electrical conductor 352 contained within the hydrogen and oxygen generator 312 thereby ceasing production of hydrogen and oxygen gas. When gas pressure within the electrolyte reservoir 318 drops below a pre-determined level, electrical current is connected to the electrical conductor 352 contained within the hydrogen and oxygen generator 312 thereby commencing production of hydrogen and oxygen gas. The preselected level is less than the preselected level required to cause a pressure release through plate 320.

This self-producing on-demand hydrogen and oxygen generating system 300 further comprises a non-return valve 322 connected at one end to an upper end of the electrolyte reservoir 318 below plate 320. The non-return valve 322 is further connected to a dryer/filter means or tank 332 at an opposite distal end.

System 300 further comprises another filter/dryer means or tank 330 in fluid communication with one end of the electrolyte reservoir 318 above plate 320 and further connected at an opposite distal end to another non-return valve 344 via gas line 342, which is connected at an opposite end to another filter/dryer means or tank 332.

System 300 further comprises a decompression valve 326 in fluid communication at one end to the top end of the electrolyte reservoir 318 and further being in fluid communication with the gas pipe 350, which in turn is connected to radiator 314.

The welding system 300 further comprises a microprocessor controlled D.C. amperage regulator 305 adapted to regulate the D.C. amperage from the power source to the hydrogen and oxygen generator 312. A first microprocessor controlled cut-off switch 306 is adapted to terminate the power source to the welder in response to a malfunction of the pump 316.

A second microprocessor controlled cut-off switch 307 is adapted to terminate the power source to the welder in response to an insufficient electrolyte solution condition within the electrolyte reservoir 318. A microprocessor controlled liquid crystal display 308 is adapted to display operating statistics regarding the welding system 300, such statistics to include hours of operation, amperage, indicator lights and pressure gauge readings. The liquid crystal display receives input from a plurality of locations within the system 300.

A microprocessor controlled polarity change system 309 is adapted to change the polarity of the electrical conductor located within the hydrogen and oxygen generator 312. A microprocessor controlled cool-down system 313 is adapted to operate a generator fan 311 and the pump 316 wherein operation of the fan and the pump continue throughout a cool-down stage following manual shut-off of the welder 300.

The produced gas or HHO gas is routed from the dryer means 332 to the final gas reservoir tank 336. Dryer means 330 and 332 are only exemplary. It is understood that a single unit may be designed to effectively accomplish the same objective. The gas is then supplied on-demand to the engine or in this case, the welding equipment, through gas line 348 and hydrogen flash suppressor check valve (non-return valve) 338 and control valve 340.

In any of the embodiments of the apparatus/systems described above, it is understood that safety devices such as hydrogen flash suppressors and/or check valves may, when appropriate, be added components to any apparatus/systems.

While embodiments of the invention have been illustrated and described, it is not intended that these embodiments illustrate and describe all possible forms of the invention. Rather, the words used in the specification are words of description rather than limitation, and it is understood that various changes may be made without departing from the spirit and scope of the invention.

## Claims

1. An electrolyzer for the separation of water into a hydrogen-rich combustible gas comprising:
an aqueous electrolytic solution comprising water, the aqueous electrolyte solution partially filling an electrolysis chamber such that a gas reservoir region is formed above the aqueous electrolyte solution, said chamber being adapted to be used in a pressurized system;
means for adding the aqueous electrolyte solution to the chamber during operation of said electrolyzer;
two or more principal electrodes comprising one or more anode electrodes and one or more cathode electrodes, the principal electrodes being at least partially immersed in the aqueous electrolyte solution;
one or more supplemental electrodes at least partially immersed in the aqueous electrolyte solution wherein the principal electrodes and the supplemental electrodes are held in a fixed spatial relationship; and
for each supplemental adjacent electrodes, one is made of a high porosity foam meshed based material made substantially of a nickel material and the opposing electrode is made substantially of a stainless steel material, wherein said supplemental electrodes results in a (+) and (-) electrical (ionic) current flow that causes the formation of a single combustible gas over an entire surface area of both sides of all electrodes within the electrolyzer.

2. The electrolyzer according to claim 1, wherein
a power source is connected to two principal electrodes and the supplemental electrodes are not connected to the power source and the supplemental electrodes are interposed between the two principal electrodes, or
a first group of the supplemental electrodes are connected to the one or more anode electrodes with a first metallic conductor and a second group of the supplemental electrodes are connected to the one or more cathode electrode with a second metallic conductor, or
a power source is connected to the two or more principal electrodes and the supplemental electrodes are not connected to the power source and are each interposed between adjacent anode electrodes, between adjacent cathode anodes and between adjacent anode and cathode electrodes, and wherein the power source is grounded to the electrolysis chamber.

3. The electrolyzer according to claim 1 or 2, wherein adjacent electrodes are spaced-apart from each other by a distance of about 0.38 cm (0.15 inches) to about 0.89 cm (0.35 inches).

4. The electrolyzer according to any one of claims 1 to 3, wherein the electrolyzer further comprises a rack to hold the two or more principal electrodes and the one or more supplemental electrodes in the fixed spatial relationship and the two or more principal electrodes and the one or more supplemental electrodes are removably attached to the rack.

5. The electrolyzer according to claim 4, wherein the rack is made of a highly dielectric plastic, including PVC, polyethylene or polypropylene.

6. The electrolyzer according to any one of claims 1 to 5, wherein when said electrolyzer is installed in an on-demand self-producing combustible gas electrolyzer system for the separation of water into a combustible gas for use in combustion equipment, including welder/cutting/melting equipment and combustion engines, the electrolyzer system further comprises:
a pump fluidly interposed between the bottom of the electrolyte reservoir and the electrolyzer wherein the pump draws electrolytic fluid from the electrolyte reservoir and pumps it to the electrolyzer;
a radiator fluidly connected to and interposed between the electrolyzer and the electrolyte reservoir, the radiator adapted to cool the generated combustible gas before returning to the top portion of the electrolyte reservoir;
an interstitial space within the reservoir above the electrolytic fluid in the top portion of the electrolytic reservoir wherein the generated combustible gas accumulates; and
at least one dryer/filter means through which the generated combustible gas passes before being drawn as needed for use.

7. A method for increasing the fuel efficiency of an internal combustion engine or the cutting or welding efficiency of a welding system, the method comprising:
providing an electrolyzer according to any one of claims 1 to 6;
applying an electrical potential between the electrodes wherein a combustible gas is produced; and
providing means for delivery of the combustible gas to its end use.

8. The method according to claim 7, further comprising adjusting the operation of an oxygen sensor so that the oxygen sensor does not cause a fuel rich condition.

9. The method of claim 8, wherein the operation of the oxygen sensor is adjusted by an RC circuit, the RC circuit includes:
a resistor placed in series with the oxygen sensor's check engine light electrical line; and
a capacitor placed between the oxygen sensor's control line that monitors the amount of oxygen and the check engine light electrical line, wherein the capacitor is attached to the check engine electrical line at the opposite side of the resistor from where the resistor is in electrical contact with the oxygen sensor.
